(19) Europäisches Patentamt
European Patent Office
Office européen des brevets

(11) **EP 4 539 137 A1**

(12) **EUROPEAN PATENT APPLICATION**

(43) Date of publication:
**16.04.2025  Bulletin 2025/16**

(21) Application number: **24205461.7**

(22) Date of filing: **09.10.2024**

(51) International Patent Classification (IPC):
**H01M 4/13** (2010.01)   **H01M 4/62** (2006.01)
**H01M 10/0562** (2010.01)   **H01M 4/04** (2006.01)
**H01M 4/02** (2006.01)

(52) Cooperative Patent Classification (CPC):
**H01M 10/0562; H01M 4/0471; H01M 4/13;
H01M 4/62;** H01M 2004/028; H01M 2300/0071

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.10.2023   KR 20230134364
07.10.2024   KR 20240135506**

(71) Applicants:
• **Samsung Electronics Co., Ltd**
**Suwon-si, Gyeonggi-do 16677 (KR)**
• **The Royal Institution for the Advancement of
Learning / McGill University**
**Montreal, Québec H3A 2T5 (CA)**

(72) Inventors:
• **KWON, Giyun**
**Suwon-si 16678 (KR)**
• **GORMLEY, Malcolm Card**
**Montreal, H3A 0G4 (CA)**
• **REHMAN, Sarish**
**Montreal, H3A 0G4 (CA)**
• **JONDERIAN, Antranik**
**Montreal, H3A 0G4 (CA)**
• **MCCALLA, Eric**
**Montreal, H3A 0G4 (CA)**

(74) Representative: **Elkington and Fife LLP
Prospect House
8 Pembroke Road
Sevenoaks, Kent TN13 1XR (GB)**

(54) **SOLID ELECTROLYTE, METHOD OF PREPARING THE SAME, AND SECONDARY BATTERY INCLUDING THE SAME**

(57)    A solid electrolyte, a method of preparing the same, and a secondary battery including the same, wherein the solid electrolyte comprises a metal oxide including lithium, silicon, and boron, and a metal comprising at least one of iron, chromium, lanthanum, or thallium, and the solid electrolyte has a glass structure containing 60 mol% or greater of lithium based on 100 mol% of the total amount of the metal and lithium, silicon, and boron, and wherein the solid electrolyte has a softness of 152 1/BHN or greater, wherein 1/BHN is an inverse of a Brinell hardness number as measured in accordance with ISO 6506.

FIG. 3

EP 4 539 137 A1

**Description**

FIELD OF THE INVENTION

The disclosure relates to a solid electrolyte, a method of preparing the solid electrolyte, and a secondary battery including the solid electrolyte.

BACKGROUND OF THE INVENTION

The demand for batteries has continued to increase. In addition, the supply of electric vehicles has accelerated, further increasing the demand for batteries. There are many types of batteries, such as secondary batteries which can be charged and discharged, e.g., lithium-ion batteries, and primary batteries which can only be discharged. Regardless of the battery type, all these batteries generally contain an electrolyte. Electrolyte leakage and the like may lead to failures in electronic devices. In addition, lithium-ion secondary batteries in particular may have the risk of thermal runaway. To address some of the aforementioned issues, a need remains for the development of solid batteries, which use solid electrolytes in place of liquid electrolytes.

SUMMARY OF THE INVENTION

Provided is a solid electrolyte which has improved deformability while having excellent electrochemical stability and ionic conductivity.
Provided is a secondary battery which has improved cell performance by including the solid electrolyte.
Provided is a method of preparing the solid electrolyte.
Additional aspects will be set forth in part in the description which follows and, in part, will be apparent from the description, or may be learned by practice of the presented embodiments of the present disclosure.
According to an aspect of the disclosure, a solid electrolyte includes a metal oxide including lithium, silicon, and boron and a metal including at least one of iron, chromium, lanthanum, or thallium. The solid electrolyte has a glass structure including 60 mol% or greater of lithium with respect to 100 mol% of the total amount of the metal and lithium, silicon, and boron. The solid electrolyte has a softness of 152 1/BHN or greater, wherein 1/BHN is an inverse of a Brinell hardness number as measured in accordance with ISO 6506.
The solid electrolyte may have an ionic conductivity at 60 °C of about $1 \times 10^{-6}$ siemens per centimeter (S/cm) to about $5 \times 10^{-6}$ S/cm.
The metal oxide may be an oxide represented by Formula 1.

$$\text{Formula 1} \qquad \text{Li}_a\text{B}_b\text{Si}_c\text{M}_d\text{O}_e$$

In Formula 1, M may be at least one metal and is at least one of iron (Fe), chromium (Cr), lanthanum (La), or thallium (Tl), $0.6 \leq a \leq 0.8$, $0.2 \leq b \leq 0.38$, $0.01 \leq c \leq 0.19$, $0.01 \leq d \leq 0.04$, and $0 < e \leq 1$, wherein the total sum of a, b, c, and d may be 1.
In an aspect, in Formula 1, $0.6 \leq a \leq 0.73$, $0.2 \leq b \leq 0.38$, $0.01 \leq c \leq 0.1$, $0.01 \leq d \leq 0.03$, and $0 < e \leq 1$.
According to another aspect of the disclosure, a secondary battery includes: a cathode; an anode current collector; and an electrolyte disposed between the cathode and the anode current collector, wherein at least one of the cathode or the electrolyte may include the solid electrolyte.
The cathode may include a solid electrolyte and the solid electrolyte may include a metal oxide including at least one of iron (Fe), chromium (Cr), lanthanum (La), or thallium (Tl), and also including lithium (Li), silicon (Si), and boron (B). The solid electrolyte may have a glass structure including 60 mole percent (mol%) or greater of lithium with respect to 100 mol% of the total amount of the metal, lithium, silicon, and boron. The solid electrolyte may have a softness of 152 1/BHN or greater, wherein 1/BHN is an inverse of a Brinell hardness number as measured in accordance with ISO 6506. A "glass structure" as used herein, refers to a material with a highly disordered amorphous structure (i.e., a glass). Typically, a glass is a material that has hardened and solidified without crystallizing.
A first anode active material layer may be disposed between the anode current collector and the electrolyte. The first anode active material layer may include one or more of a carbon-containing anode active material, a second metal anode active material, or a second metalloid anode active material, wherein the carbon-containing anode active material may include amorphous carbon, crystalline carbon, porous carbon, or a combination thereof, and the second metal anode active material or second metalloid anode active material may include gold (Au), platinum (Pt), palladium (Pd), silicon (Si), silver (Ag), aluminum (Al), bismuth (Bi), tin (Sn), zinc (Zn), or a combination thereof.
According to an aspect of the disclosure, a method of preparing a solid electrolyte, the method includes mixing a precursor containing at least one of iron (Fe), chromium (Cr), lanthanum (La), or thallium (Tl), a lithium precursor, a silicon precursor, a boron precursor, and a solvent to obtain a mixture; first heat-treating the mixture to provide a first heat-treated mixture; second heat-treating the first heat-treated mixture to provide a product; and quenching the product to provide the solid electrolyte.

During the quenching, the cooling rate may be about $10^2$ Kelvin per second (K/s) to about $10^5$ K/s.

The precursor containing at least one of iron (Fe), chromium (Cr), lanthanum (La), or thallium (Tl) may include at least one of $Fe_2O_3$, $Cr_2O_3$, $La_2O_2$, or $Tl_2O_3$, the lithium precursor may include at least one of $Li_2O$, $Li_2CO_3$, LiCl, LiNOs, or Li(OH), the silicon precursor may include at least one of tetraethyl orthosilicate or $SiO_2$, and the boron precursor may include at least one of $H_3BO_3$ or $B_2O_3$,.

Prior to the first heat-treating, drying the mixture may be further performed to provide a dried mixture, wherein the drying may include drying at a temperature of about 50 °C to about 90 °C.

BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a graph illustrating intensity (arbitrary units, a.u.) versus diffraction angle (degrees $2\theta$) showing a result of an X-ray diffraction analysis using $CuK\alpha$ rays for the solid electrolytes prepared in Examples 1 to 4 and Comparative Examples 1 and 2;

FIG. 2 is a graph illustrating softness (inverse Brinell hardness number, 1/BHN) and ionic conductivity [$10^{-6}$ siemens per centimeter (S/cm)] of the solid electrolytes prepared according to Examples 1 to 4 and Comparative Examples 1 to 3;

FIGS. 3 to 6 are schematic diagrams of an embodiment of a lithium secondary battery;

FIG. 7 is a cross-sectional diagram of an embodiment of a structure of an all-solid battery;

FIG. 8 is a cross-sectional diagram of an embodiment of a structure of an all-solid battery;

FIG. 9 is a cross-sectional diagram of an embodiment of a structure of an all-solid battery;

FIG. 10 is a cross-sectional diagram of an embodiment of a structure of a multilayer ceramic battery;

FIG. 11 is a cross-sectional diagram of an embodiment of a structure of a multilayer ceramic battery; and

FIG. 12 is a cross-sectional diagram of an embodiment of a structure of a multilayer ceramic battery.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The present inventive concept, which will be more fully described hereinafter, may have various variations and various embodiments, and specific embodiments will be illustrated in the accompanied drawings and described in greater detail. However, the present inventive concept should not be construed as being limited to specific embodiments set forth herein. Rather, these embodiments are to be understood as encompassing all variations, equivalents, or alternatives included in the scope of the present inventive concept.

The terminology used hereinbelow is used for the purpose of describing particular embodiments only, and is not intended to limit the present inventive concept. As used herein, the singular forms are intended to include the plural forms as well, unless the context clearly indicates otherwise. As used herein, the terms "comprises" and/or "comprising," or "includes" and/or "including" specify the presence of stated features, regions, integers, steps, operations, elements, components, ingredients, materials, or combinations thereof, but do not preclude the presence or addition of one or more other features, regions, integers, steps, operations, elements, components, ingredients, materials, or combinations thereof. As used herein, "/" may be interpreted as "and", or as "or" depending on the context.

In the drawings, the thicknesses of layers and regions may be exaggerated for clarity of description. Like reference numerals denote like elements throughout the specification. Throughout the specification, when a component, such as a layer, a film, a region, or a plate, is described as being "above" or "on" another component, the component may be directly above the other component, or there may be yet another component therebetween. It will be understood that although the terms "first," "second," etc. may be used herein to describe various elements, these elements should not be limited by these terms. These terms are only used to distinguish one element from another element.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompass both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within $\pm$ 30 %, 20 %, 10 % or 5 % of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

The term "a combination thereof" as used herein may mean a mixture, a laminate, a composite, a copolymer, an alloy, a reaction product, or the like, of referents.

The term "metal" as used herein refers to both metals and metalloids such as silicon and germanium, in an elemental or ionic state.

The term "alloy" as used herein refers to a mixture of two or more metals.

As used herein, the term "cathode active material" refers to a cathode material capable of undergoing lithiation and delithiation, and the term "anode active material" refers to an anode material capable of undergoing lithiation and delithiation.

As used herein, the terms "lithiation" and "to lithiate" refer to a process of adding lithium to a cathode active material or an anode active material, and the terms "delithiation" and "to delithiate" refer to a process of removing lithium from a cathode active material or an anode active material.

As used herein, the terms "charging" and "to charge" refer to a process of providing electrochemical energy to a battery, and the terms "discharging" and "to discharge" refer to a process of removing electrochemical energy from a battery.

As used herein, the terms "positive electrode" and "cathode" refer to an electrode at which electrochemical reduction and lithiation take place during a discharging process, and the terms "negative electrode" and "anode" refer to an electrode at which electrochemical oxidation and delithiation take place during a discharging process.

The term "particle diameter" of particles, as used herein, refers to an average diameter if the particles are spherical, and refers to an average major axis length if the particles are non-spherical. The particle diameter of particles may be measured using a particle size analyzer (PSA). The term "particle diameter" of particles, as used herein, refers to, for example, an average particle diameter. The average particle diameter, unless otherwise expressly indicated, refers to a median particle diameter (D50). Median particle diameter (D50) refers to the size of particles corresponding to a cumulative value of 50 % as counted from the smallest particle size on a particle size distribution curve in which particles are accumulated from the smallest particle size to the largest particle size. The cumulative value may be, for example, a cumulative volume. The median particle diameter (D50) may be measured, for example, by a laser diffraction method.

The size of particles, if measured using a scanning electron microscope, may be determined as the average value of particle diameters of 30 or more randomly selected particles of a 1 $\mu$m or greater diameter, excluding fine particles.

The average particle diameter of the cathode active material may be measured using a laser diffraction method. More specifically, the cathode active material may be dispersed in a solution and introduced into a commercial laser diffraction particle size measurement device (e.g., Microtrac MT 3000) to undergo ultrasonic radiation at about 28 kilohertz (kHz) and a power output of 60 Watts, and the average particle diameter (D50) may be calculated based on 50 % in the particle size distribution according to the measurement device.

The term "D10" as used herein may refer to an average diameter of particles corresponding to a cumulative 10 volume percent (vol%) in a particle size distribution, and the term "D90" as used herein may refer to an average diameter of particles corresponding to a cumulative 90 vol% in a particle size distribution.

A solid electrolyte according to an embodiment, a method of preparing the same, and a secondary battery including the same are described in greater detail below.

An all-solid battery using a solid electrolyte can reduce the risk of leakage or thermal runaway and degradation of battery performance by corrosion and the like. In addition, because some solid electrolytes can provide a wider electrochemical potential window compared with liquid electrolytes, such solid electrolytes may be used to provide a battery having high energy density.

Among solid electrolytes for a lithium battery, inorganic solid electrolytes may be classified into ceramic solid electrolytes and glass solid electrolytes. Ceramic solid electrolytes may have excellent lithium-ion conductivity but require a high-temperature heat treatment for crystallization.

On the other hand, glass solid electrolytes have garnered much attention due to their superior mechanical performance compared to ceramic solid electrolytes, while having excellent lithium-ion conductivity.

For example, although the Li-B-Si based glass electrolyte has excellent mechanical performance, it generally requires further improved mechanical performance at low temperatures to provide a lithium battery capable of properly accommodating volume changes during charge and discharge.

A solid electrolyte according to an embodiment may include a metal oxide including lithium, silicon, and boron and a metal including at least one of iron, chromium, lanthanum, or thallium. The solid electrolyte may have a glass structure including 60 mole percent (mol%) or greater of lithium with respect to 100 mol% of the total amount of the metal and lithium, silicon, and boron.

The solid electrolyte may have excellent lithium-ion conductivity and excellent stability, and the solid electrolyte may have a softness of 152 1/BHN or greater, where 1/BHN is an inverse of a Brinell hardness number. If the solid electrolyte has a softness in the aforementioned range, the solid electrolyte may be easily formed into a thin film. Such a solid electrolyte may be a glass-phase electrolyte, which has improved low-temperature formability by doping a metal into a Li-B-Si-O (LBSO) oxide electrolyte.

A solid electrolyte according to an embodiment may be a solid electrolyte formable at low temperatures, which has a glass structure containing 60 mol% or greater of lithium with respect to 100 mol% of the total amount of the metal and lithium (Li), silicon (Si), and boron (B), and the solid electrolyte may include a metal oxide including at least one of iron (Fe), chromium (Cr), lanthanum (La), or thallium (Tl), and also including lithium (Li), silicon (Si), and boron (B), wherein the solid electrolyte may have a softness of 152 1/BHN or greater.

A high concentration of a lithium oxide may interfere with obtaining a metal oxide having a glass phase. However, an oxide-containing solid electrolyte according to an embodiment may have a glass-phase structure with 60 mol% or greater of lithium, and by doping at least one of iron (Fe), chromium (Cr), lanthanum (La), or thallium (Tl) in a metal oxide, an oxide-containing solid electrolyte having a glass phase may be obtained. Such oxide-containing solid electrolytes, due to having an amorphous phase, may be formable at a low temperature and have excellent ionic conductivity. In addition, the low temperature may be, for example, 350 °C or greater, for example, a temperature of about 350 °C to about 500 °C. In addition, oxides having a glass-ceramic phase may have reduced formability at a low temperature compared with glass oxides. For example, the low temperature may be, for example, 350 °C or greater, for example, a temperature of about 350 °C to about 500 °C.

If the amount of lithium in the oxide-containing solid electrolyte is less than 60 mol%, an amorphous oxide may be easily realized, but achieving a target ionic conductivity may be difficult.

If the solid electrolyte has a softness of less than 152 1/BHN, the solid electrolyte may have poor deformability, and thus, its low-temperature formability of the solid electrolyte may fail to reach a satisfactory level.

The amount of lithium in the metal oxide may be 60 mol% or greater, about 60 mol% to about 73 mol%, about 60 mol% to about 72 mol%, about 62 mol% to about 70 mol%, or about 62 mol% to about 68 mol%, with respect to the total amount of the metal and lithium, silicon, and boron. If the amount of lithium is 60 mol% or greater, a solid electrolyte having excellent low-temperature formability as well as excellent ionic conductivity may be prepared.

The amount of the metal (M) in the metal oxide may be 4 mol% or less, about 1 mol% to about 4 mol%, about 1 mol% to about 3 mol%, about 1 mol% to about 2 mol%, about 1 mol% to about 1.8 mol%, about 1 mol% to about 1.6 mol%, about 1 mol% to about 1.5 mol%, about 1 mol% to about 1.4 mol%, about 1 mol% to about 1.3 mol%, or about 1 mol% to about 1.2 mol%. If the amount of the metal (M) in the metal oxide is 4 mol% or less, the solubility of lithium in the metal oxide may increase, which consequently leads to an increase in deformability and an appropriate increase in ionic conductivity of the oxide-containing solid electrolyte.

The amount of boron in the metal oxide may be about 20 mol% to about 60 mol%, about 20 mol% to about 50 mol%, about 20 mol% to about 40 mol%, or about 20 mol% to about 35 mol%. In addition, the amount of silicon in the metal oxide may be about 0.1 mol% to about 40 mol%, about 0.1 mol% to about 30 mol%, about 0.1 mol% to about 20 mol%, about 0.1 mol% to about 10 mol%, or about 0.1 mol% to about 5 mol%. If the respective amounts of boron and silicon in the metal oxide are within the aforementioned ranges, the oxide-containing solid electrolyte may maintain a glass phase and thus be able to maintain excellent low-temperature formability.

In the oxide-containing solid electrolyte, the amount of lithium, the amount of metal, the amount of boron, and the amount of silicon may be measured using inductively coupled plasma atomic emission spectroscopy (ICP-AES) or the like.

A solid electrolyte according to an embodiment may have excellent stability with lithium metal. Furthermore, due to having a low glass-transition temperature, if the solid electrolyte is mixed with an electrode active material to provide a mixture and then the mixture is hot-pressed at a temperature greater than a glass-transition temperature of the metal oxide, the solid electrolyte may provide improved wettability with the electrode active material. As described above, a metal oxide according to an embodiment, due to having a low glass-transition temperature, may be used to prepare a cathode having excellent physical properties at low co-sintering temperatures.

A solid electrolyte according to an embodiment may have a glass-transition temperature of about 250 °C to about 500 °C, about 250 °C to about 450 °C, about 270 °C to about 400 °C, about 280 °C to about 350 °C, for example, about 290 °C to about 320 °C.

As described above, because the metal oxide included in the solid electrolyte according to an embodiment has a glass transition temperature of 500 °C or less, the sintering temperature may be set to 500 °C or less when sintering laminates to manufacture lithium batteries using such oxide-containing solid electrolyte, and as a result, a wider range of materials may become available to form cathode layers and anode layers. For example, if carbon-containing components are used as a material forming the cathode layers and/or anode layers and the sintering temperature is high, there may be loss of the carbon-containing components, which may result in a decrease in energy density. Therefore, sintering at a low sintering temperature may prevent or minimize loss of carbon-containing components if such carbon-containing components are used as an electrode layer-forming material.

A glass oxide-containing solid electrolyte according to an embodiment may be identifiable through X-ray diffraction (XRD) analysis. A glass ceramic-phase oxide containing solid electrolyte may be distinguished through transmission electron microscopy (TEM) analysis, by ring patterns (glass) and point patterns (ceramic) in TEM images, whereas a glass-phase oxide containing solid electrolyte is identifiable by the absence of such point patterns that are typically observed in a glass ceramic-phase oxide.

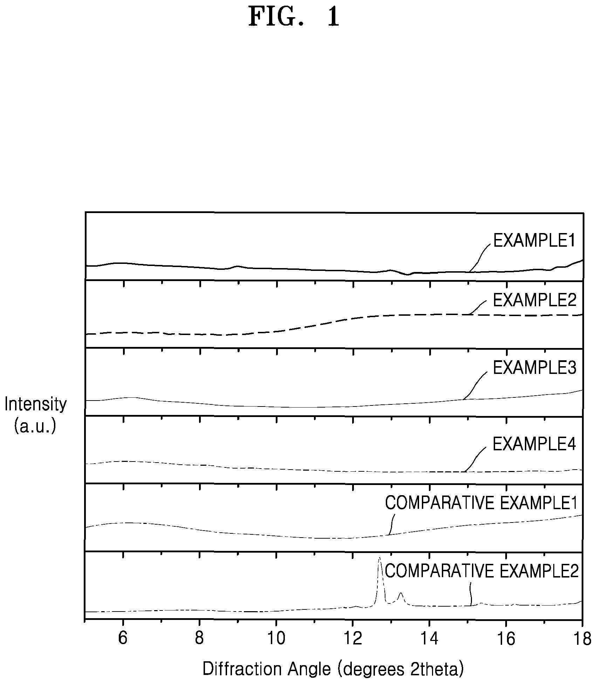

In an XRD spectrum of the electrolyte, the peak intensity ratio ($I_b/I_a$) of peak intensity ($I_b$) at a diffraction angle of $13°2\theta \pm 1.0°2\theta$ to peak intensity ($I_a$) at a diffraction angle of $5.0°2\theta$ to $9.0°2\theta$ may be 3.0 or less, from about 0.001 to about 3.0, for example from about 0.01 to about 3.0. The peak at a diffraction angle of $13°2\theta \pm 1.0°2\theta$ refers to the peak at a diffraction angle $13°2\theta \pm 1.0°2\theta$ of the oxide of Comparative Example 2 in FIG. 1, and the peak at a diffraction angle of $5.0°2\theta$ to $9.0°2\theta$ refers to the peak at a diffraction angle of $5.0°2\theta$ to $9.0°2\theta$ of the oxide of Comparative Example 1 in FIG. 1. With the solid electrolyte having a peak intensity ratio ($I_b/I_a$) in the aforementioned ranges, improved ionic conductivity may be provided.

The X-ray diffraction analysis of the oxide of the solid electrolyte according to an embodiment shows the absence of peaks at a diffraction angle of $13°2\theta \pm 1.0°2\theta$ and at a diffraction angle of $5.0°2\theta$ to $9.0°2\theta$.

A solid electrolyte according to an embodiment may have an ionic conductivity at 60 °C of $1 \times 10^{-7}$ S/cm or greater, $1 \times 10^{-6}$ S/cm or greater, or about $1 \times 10^{-6}$ S/cm to about $5 \times 10^{-6}$ S/cm. The solid electrolyte including an oxide represented by Formula 1, due to having an increased ionic conductivity in the aforementioned ranges, may be used as an electrolyte in a secondary battery.

The metal oxide according to an embodiment may be an oxide represented by Formula 1.

$$\text{Formula 1} \qquad Li_aB_bSi_cM_dO_e$$

In Formula 1, M may be at least one metal and is at least one of iron (Fe), chromium (Cr), lanthanum (La), or thallium (Tl), $0.6 \leq a \leq 0.8$, $0.2 \leq b \leq 0.38$, $0.01 \leq c \leq 0.19$, $0.01 \leq d \leq 0.04$, and $0 < e \leq 1$, wherein the total sum of a, b, c, and d may be 1.

In an aspect, in Formula 1, $0.6 \leq a \leq 0.73$, $0.2 \leq b \leq 0.38$, $0.01 \leq c \leq 0.1$, $0.01 \leq d \leq 0.03$, and $0 < e \leq 1$. For example, $0.2 \leq b \leq 0.3$ and $0.01 \leq c \leq 0.045$.

The oxide of Formula 1 may be at least one of the oxides of Formulas 2 to 5.

$$\text{Formula 2} \qquad Li_aB_bSi_cFe_dO_e$$

In Formula 2, 0.6≤a≤0.73, 0.2≤b≤0.38, 0.01≤c≤0.1, 0.01≤d≤0.03, and 0<e≤1, wherein the total sum of a, b, c, and d may be 1,

Formula 3 $Li_aB_bSi_cCr_dO_e$

In Formula 3, 0.6≤a≤0.73, 0.2≤b≤0.38, 0.01≤c≤0.1, 0.01≤d≤0.03, and 0<e≤1, wherein the total sum of a, b, c, and d may be 1,

Formula 4 $Li_aB_bSi_cLa_dO_e$

In Formula 4, 0.6≤a≤0.73, 0.2≤b≤0.38, 0.01≤c≤0.1, 0.01≤d≤0.03, and 0<e≤1, wherein the total sum of a, b, c, and d may be 1.

Formula 5 $Li_aB_bSi_cTl_dO_e$

In Formula 5, 0.6≤a≤0.73, 0.2≤b≤0.38, 0.01≤c≤0.1, 0.01≤d≤0.03, and 0<e≤1, wherein the total sum of a, b, c, and d may be 1.

In an aspect, in Formulas 2 to 5, 0.2≤b≤0.3 and 0.01≤c≤0.045.

The oxide may be $Li_{0.625}B_{0.321}Si_{0.044}Fe_{0.010}O_{1-\sigma}$, $Li_{0.625}B_{0.321}Si_{0.044}Cr_{0.010}O_{1-\sigma}$, $Li_{0.625}B_{0.321}Si_{0.044}La_{0.010}O_{1-\sigma}$, $Li_{0.625}B_{0.321}Si_{0.044}Tl_{0.010}O_{1-\sigma}$, or a combination thereof, wherein $\sigma$ is to render the charge state of the oxide to be neutral, wherein 0≤σ<1.

The softness (1/BHN) of the solid electrolyte may be about 152 1/BHN to about 260 1/BHN, about 160 1/BHN to about 255 1/BHN, about 170 1/BHN to about 250 1/BHN, about 180 1/BHN to about 252 1/BHN, or about 187 1/BHN to about 255 1/BHN. The softness may be an inverse of the Brinell hardness number as measured by the Brinell hardness test method, and for details, refer to the descriptions provided in Evaluation Examples below. The Brinell hardness test may be performed in accordance with ISO 6506.

As described previously, the solid electrolyte according to an embodiment may have improved deformable characteristics and may be formable into various shapes at low temperatures. Furthermore, the solid electrolyte, due to being formable at low temperatures, may reduce deformations of a structure to which it is coupled, e.g., electrodes, and may stabilize interfacial characteristics between the solid electrolyte and the structure.

The solid electrolyte containing a metal oxide represented by Formula 1 may facilitate lithium transfer. Furthermore, the solid electrolyte may have a thickness of about 0.1 micrometer ($\mu$m) to about 500 $\mu$m, about 1 $\mu$m to about 200 $\mu$m, about 5 $\mu$m to about 200 $\mu$m, for example, about 5 $\mu$m to about 80 $\mu$m. With the solid electrolyte having a thickness in the aforementioned ranges, the solid electrolyte may have excellent mechanical properties, such as deformability, and improved ionic conductivity.

The solid electrolyte including a compound represented by Formula 1 is not limited to any particular form. The solid electrolyte including a compound represented by Formula 1 may have, for example, a particulate form. The particulate form may be a spherical particle or a non-spherical particle. The solid electrolyte in the particulate form may be formed into various forms. The formed solid electrolyte may be in the form of a sheet, for example.

The secondary battery may be, for example, a lithium battery.

Lithium Battery

A lithium battery according to another embodiment may include: a cathode; an anode; and an electrolyte disposed between the cathode and the anode, wherein at least one of the cathode, the anode, or the electrolyte may include the solid electrolyte described above. The aforementioned solid electrolyte may include a compound represented by Formula 1. As a lithium battery contains the aforementioned solid electrolyte, the internal resistance of the lithium battery may be reduced and the cycling performance of the lithium battery may improve. The lithium battery is not limited to any particular type and may be, for example, a lithium-ion battery, an all-solid battery, a multilayer ceramic (MLC) battery, a lithium-air battery, or the like.

According to an embodiment, the cathode may include, for example, the solid electrolyte according to an embodiment.

If a lithium battery is manufactured using the solid electrolyte according to an embodiment, highly uniform interfacial characteristics between the solid electrolyte and the cathode may be ensured.

The electrolyte of the lithium battery may be, for example, a liquid electrolyte, a solid electrolyte, a gel electrolyte, or a combination thereof.

In one or more embodiments, the electrolyte may be an organic electrolyte. The organic electrolyte may be prepared by, for example, dissolving a lithium salt in an organic solvent.

For the organic solvent, any organic solvent available in the art may be used. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and a mixture thereof.

The lithium salt may be any lithium salt available in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO_2)(C_yF_{2y+1}SO_2)$ $(1 \leq x \leq 20, 1 \leq y \leq 20)$, LiCl, LiI, or a mixture thereof. The concentration of the lithium salt may be, for example, about 0.1 moles per liter (M) to about 5.0 M.

Examples of the solid electrolyte include an oxide solid electrolyte, a sulfide solid electrolyte, a polymer solid electrolyte, or a combination thereof.

The solid electrolyte may be, for example, an oxide solid electrolyte. The oxide solid electrolyte may be one or more selected from $Li_{1+x+y}Al_xTi_{2-x}Si_yP_{3-y}O_{12}$ ($0<x<2$ and $0\leq y<3$), $BaTiO_3$, $Pb(Zr_aTi_{1-a})O_3$ ("PZT", $0\leq a\leq 1$), $Pb_{1-x}La_xZr_{1-y}Ti_yO_3$ ("PLZT") ($0\leq x<1$ and $0\leq y<1$), $Pb(Mg_{1/3}Nb_{2/3})O_3$-$PbTiO_3$ ("PMN-PT"), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al_aGa_{1-a})_x(Ti_bGe_{1-b})_{2-x}Si_yP_{3-y}O_{12}$ ($0\leq x\leq 1$, $0\leq y\leq 1$, $0\leq a\leq 1$, and $0\leq b\leq 1$), $Li_xLa_yTiO_3$ ($0<x<2$ and $0<y<3$), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (M is Te, Nb, or Zr, and x is an integer of 1 to 10). The solid electrolyte may be produced by methods such as a sintering method. For example, the oxide solid electrolyte may be a garnet solid electrolyte selected from $Li_7La_3Zr_2O_{12}$ ("LLZO") and $Li_{3+x}La_3Zr_{2-a}M_aO_{12}$ ("M-doped LLZO", M is Ga, W, Nb, Ta, or Al, $0<a<2$, and x is an integer of 1 to 10). As used herein, garnet is a silicate that can be referred to using the formula $X_3Y_2(SiO_4)_3$, wherein X is a divalent cation, and Y is a trivalent cation. As used herein, the term "garnet solid electrolyte" means that the solid electrolyte is isostructural with garnet, e.g., $Mg_3Al_2(SiO_4)_3$. In the disclosure, the term "isostructural" refers to crystal structures of chemical compounds. The crystal structures are the same, but the cell dimensions and/or the chemical composition may not be the same.

Examples of the sulfide solid electrolyte include lithium sulfide, silicon sulfide, phosphorus sulfide, boron sulfide, or a combination thereof. Sulfide solid electrolyte particles may include $Li_2S$, $P_2S_5$, $SiS_2$, $GeS_2$, $B_2S_3$, or a combination thereof. The sulfide solid electrolyte particles may be $Li_2S$ or $P_2S_5$. The sulfide solid electrolyte particles are known to have a higher lithium-ion conductivity than other inorganic compounds. For example, the sulfide solid electrolyte may include $Li_2S$ and $P_2S_5$. If sulfide solid electrolyte materials constituting the sulfide solid electrolyte includes $Li_2S$-$P_2S_5$, the mixing molar ratio of $Li_2S$ to $P_2S_5$ may be, for example, in a range of about 50:50 to about 90:10. For example, a material such as $Li_3PO_4$, a halogen, a halogen compound, $Li_{2+2x}Zn_{1x}GeO_4$ ("LISICON", $0\leq x<1$), $Li_{3+y}PO_{4-x}N_x$ ("LIPON", $0<x<4$ and $0<y<3$), $Li_{3.25}Ge_{0.25}P_{0.75}S_4$ ("Thio-LISICON"), and $Li_2O$-$Al_2O_3$-$TiO_2$-$P_2O_6$ ("LATP") may be added to an inorganic solid electrolyte such as $Li_2S$-$P_2S_5$, $SiS_2$, $GeS_2$, $B_2S_3$, or a combination thereof, to prepare an inorganic solid electrolyte, and this inorganic solid electrolyte may be used as a sulfide solid electrolyte. Non-limiting examples of the sulfide solid electrolyte materials include $Li_2S$-$P_2S_5$; $Li_2S$-$P_2S_5$-LiX (X is a halogen element, e.g., Cl, Br, or I); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ - $P_2S_5$-$Z_mS_n$ ($0<m<10$, $0<n<10$, and Z is Ge, Zn or Ga); $Li_2S$-$GeS_2$; $Li_2S$-$SiS_2$-$Li_3PO_4$; and $Li_2S$-$SiS_2$-$Li_pMO_q$ ($0<p<10$, $0<q<10$, and M is P, Si, Ge, B, Al, Ga or In). In this regard, the sulfide solid electrolyte material may be prepared by subjecting a starting material (e.g., $Li_2S$, $P_2S_5$, etc.) of the sulfide solid electrolyte material to a treatment, such as melt quenching, mechanical milling, and the like. In addition, a calcination process may be performed following the above treatment. The sulfide solid electrolyte may be amorphous or crystalline, or may be in a mixed state between amorphous and crystalline.

For example, the polymer solid electrolyte may include a mixture of a lithium salt and a polymer, or may include a polymer having an ion-conducting functional group. For example, the polymer solid electrolyte may be a polymer electrolyte that is in a solid state at 25 °C and 1 atmosphere (atm). For example, the polymer solid electrolyte may not contain liquid. The polymer solid electrolyte may include a polymer. For example, the polymer may be polyethylene oxide ("PEO"), polyvinylidene fluoride ("PVDF"), vinylidene fluoride-hexafluoropropylene ("PVDF-HFP"), a poly(styrene-b-ethylene oxide) block copolymer ("PS-PEO"), poly(styrene-butadiene), poly(styreneisoprene-styrene), a poly(styrene-b-divinylbenzene) block copolymer, a polystyreneethylene oxide-styrene) block copolymer, polystyrene sulfonate ("PSS"), polyvinyl fluoride ("PVF"), poly(methylmethacrylate) ("PMMA"), polyethylene glycol ("PEG"), polyacrylonitrile ("PAN"), polytetrafluoroethylene ("PTFE"), polyethylenedioxythiophene ("PEDOT"), polypyrrole ("PPY"), polyaniline, polyacetylene, Nafion, Aquivion, Flemion, Gore, Aciplex, Morgane ADP, sulfonated poly(ether ether ketone) ("SPEEK"), sulfonated poly(arylene ether ketone ketone sulfone ("SPAEKKS"), sulfonated poly(aryl ether ketone ("SPAEK"), poly[bis(benzimidazobenzisoquinolinones)] ("SPBIBI"), or a combination thereof. However, the polymer is not limited to the aforementioned examples and may be any material available in the art that is used in polymer electrolyte. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of 1,000 Dalton or greater, 10,000 Dalton or greater, 100,000 Dalton or greater, or 1,000,000 Dalton or greater.

The gel electrolyte may be, for example, a polymer gel electrolyte. For example, the gel electrolyte may have a gel state while not containing a polymer.

For example, the polymer gel electrolyte may include a liquid electrolyte and a polymer, or may include an organic solvent and a polymer having an ion-conducting functional group. The polymer gel electrolyte may be, for example, a polymer electrolyte that is in a gel state at 25 °C and 1 atm. For example, the polymer gel electrolyte may have a gel state without containing liquid. The liquid electrolytes used in the polymer gel electrolytes may be, for example, a mixture of an ionic liquid, a lithium salt, and an organic solvent; a mixture of a lithium salt and an organic solvent; a mixture of an ionic liquid and an organic solvent; or a mixture of a lithium salt, and an ionic liquid. The polymer used in the polymer gel electrolyte may be selected from the polymers used in the solid polymer electrolyte. The organic solvent may be selected from the organic solvents used in the liquid electrolyte. The lithium salt may be selected from the lithium salts used in the polymer solid electrolyte. The ionic liquid may refer to a room-temperature molten salt or a salt that is in a liquid state at room temperature, which consists of ions alone and has a melting point of room temperature or less. For example, the ionic liquid may be at least one selected from compounds containing: a) at least one cation of ammonium, pyrrolidinium, pyridinium, pyrimidinium, imidazolium, piperidinium, pyrazolium, oxazolium, pyridazinium, phosphonium, sulfonium, triazolium, or a mixture thereof; and b) at least one anion of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^-$, $CF_3SO_3^-$, $(FSO_2)_2N^-$, $(C_2F_5SO_2)_2N^-$, $(C_2F_5SO_2)(CF_3SO_2)N^-$, or $(CF_3SO_2)_2N^-$. For example, the polymer solid electrolyte may form a polymer gel electrolyte by impregnation in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of 500 Dalton or greater, 1,000 Dalton or greater, 10,000 Dalton or greater, 100,000 Dalton or greater, or 1,000,000 Dalton or greater.

The lithium battery may be, for example, a lithium-ion battery or an all-solid secondary battery.

These batteries will be described in greater detail below.

Lithium-Ion Battery

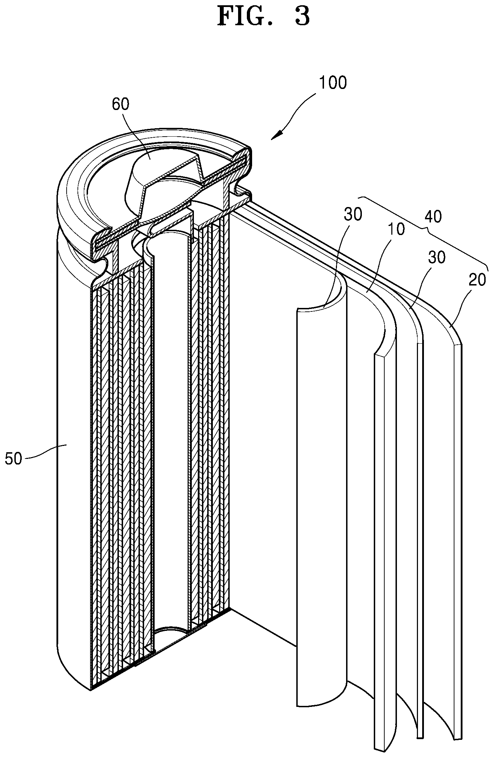

FIGS. 3 to 6 are schematic diagrams of a lithium-ion battery according to an embodiment.

The lithium-ion battery may be, for example, a lithium battery containing a liquid electrolyte. A lithium-ion battery may include a solid electrolyte according to an embodiment.

A lithium-ion battery may include, for example, a cathode containing a cathode active material; an anode containing an anode active material; and a liquid electrolyte disposed between the cathode and the anode, wherein at least one of the cathode and the anode may include a solid electrolyte according to an embodiment. A lithium-ion battery may include, for example, a cathode, an anode, and a liquid electrolyte disposed between the cathode and the anode, wherein a protective layer including a solid electrolyte according to an embodiment may be disposed on one side of at least one of the cathode and the anode. A lithium-ion battery may include, for example, a cathode active material layer, wherein the cathode active material layer may include a composite cathode active material including a core including a cathode active material; and a first coating layer disposed on the core, wherein the first coating layer may include a solid electrolyte according to an embodiment. A lithium-ion battery may include, for example, an anode active material layer, wherein the anode active material layer may include a composite anode active material including a core including an anode active material; and a second coating layer disposed on the core, wherein the second coating layer may include a solid electrolyte according to an embodiment.

A lithium-ion battery may be prepared as follows, for example.

First, a cathode may be prepared. A cathode active material composition may be prepared by mixing a cathode active material, a conductive material, a binder, and a solvent. A cathode may be prepared by having the cathode active material composition directly applied and dried on a cathode current collector. Alternatively, a cathode may be prepared by casting the cathode active material composition on a separate support, and then having a film exfoliated from the support laminated on a cathode current collector. Alternatively, the cathode active material composition may be prepared as an electrode ink containing excess solvent, and then printed on a support by an ink-jet method or a Gravure printing method to thereby prepare a cathode. The printing method is not limited to the aforementioned methods, and may be any method available for general coating and printing.

A solid electrolyte according to an embodiment may be coated onto one surface of the cathode active material layer included in the cathode to thereby form a cathode protective layer. Alternatively, solid electrolyte particles according to an embodiment may be added to the cathode active material layer composition and thus included within the cathode active material layer.

The cathode current collector may utilize, for example, a plate, a foil, or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The cathode current collector may include, for example, a base film, and a metal layer disposed on one side or both sides of the base film. For example, the base film may include a polymer. For example, the polymer may include polyethylene terephthalate ("PET"), polyethylene ("PE"), polypropylene ("PP"), polybutylene terephthalate ("PBT"), polyimide ("PI"), or a combination thereof. For example, the base film may be an insulator. As the base film includes an insulating thermoplastic polymer, in the event of a short circuit, the base film is softened or liquefied, blocking the operation of the battery, to thereby prevent a rapid increase in electrical current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In the event of an overcurrent, the metal layer may be disconnected, thus acting as an electrochemical fuse to provide protection against short circuits. A limiting current and a maximum current may be controlled through controlling the thickness of the metal layer. The metal layer may be plated or deposited on the base film. Because the limiting current and/or maximum current of the cathode current collector 11 decrease if the thickness of the metal layer decreases, the stability of the lithium battery during a short circuit may improve. A lead-tab may be added on the metal layer for connection to the outside. The lead-tab may be welded to the metal layer or a metal layer/base film laminate by ultrasonic welding, laser welding, spot welding, or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, or the like. For example, the metal chip may be an aluminum foil, a copper foil, an SUS foil, or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. With the base film having a thickness within the above ranges, the weight of the electrode assembly may be more effectively reduced. For example, the base film may have a melting point of about 100 °C to about 300 °C, about 100 °C to about 250 °C or less, or about 100 °C to about 200 °C. Because the base film has a melting point within the above ranges, the base film may easily melt and be bonded to the lead-tab while welding the lead-tab. To improve adhesion between the base film and the metal layer, a surface treatment such as corona treatment may be performed on the base film. For example, the metal layer may have a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. With the metal layer having a thickness within the above ranges, the electrode assembly may provide stability while maintaining conductivity. For example, the metal chip may have a thickness of about 2 $\mu$m to about 10 $\mu$m, about 2 $\mu$m to about 7 $\mu$m, or about 4 $\mu$m to about 6 $\mu$m. With the metal chip having a thickness within the above ranges, the metal layer and the lead-tab may be more easily connected. With the cathode current collector 11 having the aforementioned structure, the weight of the electrode may be reduced, and as a result, the energy density of a solid secondary battery may improve.

The cathode current collector may be omitted. The cathode current collector may further include a carbon layer disposed on one side or both sides of a metal substrate. With the carbon layer further disposed on the metal substrate, it may be possible to protect metals in the metal substrate from corrosion by a solid electrolyte included in the cathode layer, and reduce the interfacial resistance between the cathode active material layer and the cathode current collector. The carbon layer may have a thickness of, for example, about 0.1 $\mu$m to about 5 $\mu$m, about 0.1 $\mu$m to about 3 $\mu$m, or about 0.1 $\mu$m to about 1 $\mu$m. If the thickness of the carbon layer is excessively thin, it may be difficult to completely prevent the metal substrate and the solid electrolyte from contacting each other. If the carbon layer is excessively thick, the energy density of an all-solid secondary battery may decrease. The carbon layer may include amorphous carbon, crystalline carbon, and the like.

As a cathode active material, a compound capable of reversible intercalation and deintercalation of lithium (lithiated intercalation compound) may be used. In one or more embodiments, one or more selected from composite oxides of lithium with a metal of cobalt, manganese, nickel, or a combination thereof may be utilized.

The composite oxide may be a lithium transition metal composite oxide, examples of which include a lithium nickel oxide, a lithium cobalt oxide, a lithium manganese oxide, a lithium iron phosphate compound, a cobalt-free lithium nickelmanganese oxide, or a combination thereof.

As an example, a compound represented by any of the following formulas may be used: $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$

$(0.90 \le a \le 1.8, 0.001 \le b \le 0.1)$; $Li_aMn_{1-b}G_bO_2$ $(0.90 \le a \le 1.8, 0.001 \le b \le 0.1)$; $Li_aMn_2G_bO_4$ $(0.90 \le a \le 1.8, 0.001 \le b \le 0.1)$; $Li_aMn_{1-g}G_gPO_4$ $(0.90 \le a \le 1.8, 0 \le g \le 0.5)$; $Li_{(3-f)}Fe_2(PO_4)_3$ $(0 \le f \le 2)$; and $Li_aFePO_4$ $(0.90 \le a \le 1.8)$.

In the above formulas, A may be Ni, Co, Mn, or a combination thereof; X may be Al, Ni, Co, Mn, Cr, Fe, Mg, Sr, V, a rare-earth element, or a combination thereof; D may be O, F, S, P, or a combination thereof; G may be Al, Cr, Mn, Fe, Mg, La, Ce, Sr, V, or a combination thereof; and $L^1$ may be Mn, Al, or a combination thereof.

As an example, the cathode active material may be a high-nickel cathode active material with a nickel content of 80 mole percent (mol%) or greater, 85 mol% or greater, 90 mol% or greater, 91 mol% or greater, or 94 mol% or greater and 99 mol% or less, with respect to 100 mol% of all metals other than lithium in a lithium transition metal composite oxide. The high-nickel cathode active materials, due to their ability to realize high capacity, may be applied to a high-capacity, high-density lithium secondary battery.

A cathode for a lithium secondary battery may include a current collector and a cathode active material layer formed on the current collector. The cathode active material layer may include a cathode active material and may further include a binder and/or a conductive material.

For example, the cathode may further include an additive that can act as a sacrificial cathode.

The conductive material may include, for example, carbon black, carbon fibers, graphite, or a combination thereof. The carbon black may be, for example, acetylene black, Ketjen black, Super P carbon, channel black, furnace black, lamp black, thermal black, or a combination thereof. The graphite may be natural graphite or artificial graphite. A combination containing at least one of the aforementioned conductive materials may be used. The cathode may further include an additional conductive material other than the aforementioned carbonaceous conductive materials. Examples of the additional conductive material include electrically conductive fibers, such as metal fibers; fluorinated carbon powder; metal powder such as aluminum powder, or nickel powder; conductive whiskers such as zinc oxide and potassium titanate; or polyethylene derivatives. A combination of one or more of the aforementioned conductive materials may be used.

A binder may improve adhesion between cathode components, and adhesion of the cathode active material layer to the current collectors. Examples of the binder include but are not limited to, polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, or the like.

The amount of the cathode active material may be about 90 weight percent (wt%) to about 99.5 wt% with respect to 100 wt% of the cathode active material layer, and the amount of the binder and the conductive material may be about 0.5 wt% to about 5 wt%, respectively, with respect to 100 wt% of the cathode active material layer.

N-methylpyrrolidone, acetone, and/or water may be utilized as a solvent. Each of the cathode active material, the conductive material, the binder, and the solvent may be used in an amount commonly used in a lithium battery.

It may be possible to create pores within the cathode active material layer by adding a plasticizer to the cathode active material composition.

Next, an anode may be prepared. An anode active material composition may be prepared by mixing an anode active material, a conductive material, a binder, and a solvent. An anode may be prepared by having the anode active material composition directly applied and dried on a copper current collector. Alternatively, an anode may be prepared by casting the anode active material composition on a separate support, and then having an anode active material film exfoliated from the support and laminated on the copper current collector. Alternatively, the anode active material composition may be prepared as an electrode ink containing excess solvent, and then printed on a support by an ink-jet method or a Gravure printing method to thereby prepare an anode. Without being limited to the aforementioned methods, the printing may utilize any method available for use in general coating and printing.

The anode active material may include a material capable of reversible intercalation/deintercalation of lithium ions, lithium metal, an alloy of lithium metal, a material capable of doping and dedoping lithium, or a transition metal oxide.

Examples of the material capable of reversible intercalation/deintercalation of lithium ions include carbon-containing anode active materials, such as crystalline carbon, amorphous carbon, or a combination thereof. Examples of the crystalline carbon include graphite, such as artificial graphite or natural graphite in shapeless, plate, flake, spherical or fiber form. Examples of the amorphous carbon include soft carbon or hard carbon, mesophase pitch carbides, calcined cokes, or the like.

Examples of the alloy of lithium metal include alloys of lithium with a metal of Na, K, Rb, Cs, Fr, Be, Mg, Ca, Sr, Si, Sb, Pb, In, Zn, Ba, Ra, Ge, Al, or Sn.

Examples of the material capable of doping and dedoping lithium include a Si anode active material or a Sn anode active material. The Si anode active material may be silicon, a silicon-carbon composite, $SiO_x$ ($0<x<2$), a Si-Q alloy (wherein Q is selected from alkali metals, alkaline-earth metals, Group 13 elements, Group 14 elements (excluding Si), Group 15 elements, Group 16 elements, transition metals, rare-earth elements, and a combination thereof), or a combination thereof. The Sn anode active material may be Sn, $SnO_2$, a Sn alloy, or a combination thereof.

The silicon-carbon composite may be a composite of silicon and amorphous carbon. According to an embodiment, the silicon-carbon composite may be in the form of silicon particles with amorphous carbon coated on the surfaces of the silicon particles. For example, the silicon-carbon composite may include secondary particles (core) in which silicon primary particles are assembled, and an amorphous carbon coating layer (shell) situated on the surfaces of these secondary particles. The amorphous carbon may also be situated between the silicon primary particles, for example, such that the silicon primary particles may be coated with amorphous carbon. The secondary particles may be present while dispersed in an amorphous carbon matrix.

The silicon-carbon composite may further include crystalline carbon. For example, the silicon-carbon composite may include a core containing crystalline carbon and silicon particles, and an amorphous carbon coating layer situated on the surface of the core.

The Si anode active material or Sn anode active material may be used in a mixture with a carbon-containing anode active material.

An anode for a lithium secondary battery may include a current collector and an anode active material layer positioned on the current collector. The anode active material layer may include an anode active material and may further include a binder and/or a conductive material.

For example, the anode active material layer may include about 90 wt% to about 99 wt% of an anode active material, about 0.5 wt% to about 5 wt% of a binder, and about 0 wt% to about 5 wt% of a conductive material with respect to 100 wt% of the anode active material layer.

The binder may play a role in ensuring adhesion between anode active material particles and adhesion of the anode active material to the current collectors. For the binder, a nonaqueous binder, an aqueous binder, a dry binder, or a combination thereof may be used.

Examples of the nonaqueous binder include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

Examples of the aqueous binder include, styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene-diene copolymer, polyvinylpyridine, chlorosulfonated polyethylene, latex, polyester resin, (meth)acrylic resin, phenol resin, epoxy resin, polyvinyl alcohol, or a combination thereof.

If an aqueous binder is to be used as the anode binder, a cellulose compound capable of imparting viscosity may be further included. As the cellulose compound, a mixture of one or more of carboxymethyl cellulose, hydroxypropylmethyl cellulose, methyl cellulose, or alkali metal salts thereof, may be used. As the alkali metal, Na, K, or Li may be used.

The dry binder may be, as a polymer material that can be fibrillated, for example, polytetrafluoroethylene, polyvinylidene fluoride, a polyvinylidene fluoride-hexafluoropropylene copolymer, polyethylene oxide, or a combination thereof.

The conductive material imparts conductivity to an electrode, and may be any electronically conductive material that does not cause a chemical change in a battery in which it is to be included. Examples of the conductive material include carbon-containing materials, such as natural graphite, artificial graphite, carbon black, acetylene black, Ketjen black, carbon fibers, carbon nanofibers, and carbon nanotubes; metal materials in the form of metal powder or metal fibers, containing copper, nickel, aluminum, silver, or the like; conductive polymers such as polyphenylene derivatives; or a mixture thereof.

The anode current collector may include copper foil, nickel foil, stainless steel foil, titanium foil, nickel foam, copper foam, a polymer substrate coated with a conductive metal, or a combination thereof.

The anode current collector may include, for example, a base film, and a metal layer disposed on one side or both sides of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. The polymer may be an insulating polymer. As the base film includes an insulating thermoplastic polymer, in the event of a short circuit, the base film is softened or liquefied, blocking the operation of the battery, to thereby prevent a rapid increase in electrical current. For example, the metal layer may include copper (Cu), stainless steel, titanium (Ti), iron (Fe), cobalt (Co), nickel (Ni), or an alloy thereof. The anode current collector may further include a metal chip and/or a lead-tab. For details of the base film, metal layer, metal chip, and lead-tab of the anode current collector, refer to the cathode current collector 11 described above. With the anode current collector having the aforementioned structure, the weight of the anode may be reduced, and as a result, the energy density of a solid secondary battery may improve.

A protective layer containing a solid electrolyte according to an embodiment may be disposed on one side of the anode active material layer. Alternatively, the anode active material may include anode active material particles including a core containing lithium metal, a lithium metal alloy, or a combination thereof; and a first coating layer disposed on the core, wherein the coating layer may include a solid electrolyte according to an embodiment. With such a protective layer and/or coating layer disposed on the anode, the anode may have improved lithium-ion conductivity and/or stability with lithium metal. Alternatively, a solid electrolyte according to an embodiment may be added to an anode active material layer-forming composition and thus included in the anode active material layer.

Next, a separator may be prepared.

The cathode and the anode may be separated by a separator, wherein the separator may be any separator commonly used in a lithium battery. For the separator, any separator capable of retaining a large quantity of electrolytes while exhibiting low resistance to ion migration in electrolytes may be suitable. For example, the separator may be in the form of non-woven fabric or woven fabric, formed of a material selected from glass fibers, polyester, Teflon, polyethylene, polypropylene, polytetrafluoroethylene (PTFE), or a combination thereof. In particular, a lithium-ion battery may utilize, for example, a rollable separator formed of polyethylene, polypropylene, or the like, and a lithium ion polymer battery may utilize, for example, a separator capable of retaining a large quantity of organic electrolytes.

The separator may be prepared by the method described below. Once a separator composition is prepared by mixing a polymer resin, a filler, and a solvent, the separator composition may be directly coated and dried on an electrode to form a separator film. Alternatively, the separator may be formed by casting and drying the separator composition on a support and then laminating a separator film exfoliated from the support on an electrode. The polymer resin is not particularly limited and may utilize any material available as a binder of an electrode plate. For example, the polymer resin may utilize a vinylidene fluoride/hexafluoropropylene copolymer, polyvinylidene fluoride, polyacrylonitrile, polymethyl methacrylate, or a mixture thereof. It may be preferable to use a vinylidene fluoride/hexafluoropropylene copolymer having a hexafluoropropylene content of about 8 wt% to about 25 wt% with respect to 100 wt% of the vinylidene fluoride/hexafluoropropylene copolymer.

The separator may include a porous substrate and a coating layer located on one side or both sides of the porous substrate, which contains an organic material, an inorganic material, or a combination thereof.

The porous substrate may be a polymer film formed of any one polymer of polyolefins such as polyethylene or polypropylene; polyesters such as polyethylene terephthalate or polybutylene terephthalate; polyacetal, polyamide, polyimide, polycarbonate, polyether ketone, polyaryl ether ketone, polyetherimide, polyamideimide, polybenzimidazole, polyethersulfone, polyphenylene oxide, cyclic olefin copolymers, polyphenylene sulfide, polyethylene naphthalate, glass fibers, Teflon, or polytetrafluoroethylene. In some embodiments, the porous substrate may be a polymer film formed of a copolymer or a mixture of two or more of the aforementioned polymers.

The organic material may include a polyvinylidene fluoride polymer or a (meth)acryl polymer.

The inorganic material may include, but is not limited to inorganic particles of $Al_2O_3$, $SiO_2$, $TiO_2$, $SnO_2$, $CeO_2$, MgO, NiO, CaO, GaO, ZnO, $ZrO_2$, $Y_2O_3$, $SrTiOs$, $BaTiOs$, $Mg(OH)_2$, boehmite, or a combination thereof.

The organic material and the inorganic material may be present together in a mixed state in one coating layer, or one coating layer including the organic material and another coating layer including the inorganic material may be present in a laminated form.

The separator may further include a solid electrolyte according to an embodiment. For example, a coating layer containing a solid electrolyte according to an embodiment may be added to at least one surface of the separator. The separator may include, for example, a porous substrate; and a coating layer disposed on one side or both sides of the porous substrate, wherein the coating layer may include a solid electrolyte containing a compound represented by Formula 1.

Next, a liquid electrolyte may be prepared.

The liquid electrolyte may be an organic electrolyte containing an organic solvent. The organic electrolyte may be prepared by dissolving a lithium salt in an organic solvent. For the organic solvent, any or all organic solvents available in the art may be utilized. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof. For the lithium salt, any lithium salts available in the art may be utilized. For example, the lithium salt may be $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are different from each other and each independently an integer of 1 to 20), LiCl, Lil, or a mixture thereof. The amount of the lithium salt may be about 0.1 M to about 10 M or about 0.1 M to about 5 M, but without being necessarily limited to the aforementioned ranges, may be appropriately adjusted within a range that provides improved battery performance. The liquid electrolyte may further include a flame retardant, such as a phosphorus flame retardant or a halogen flame retardant.

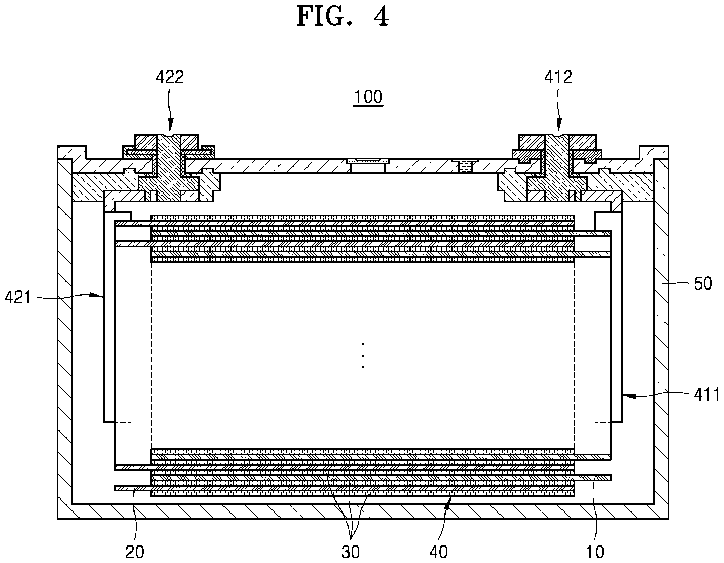

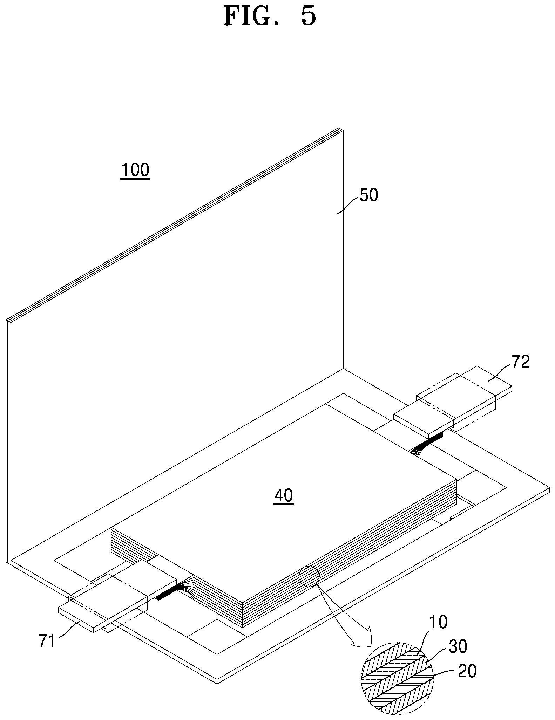

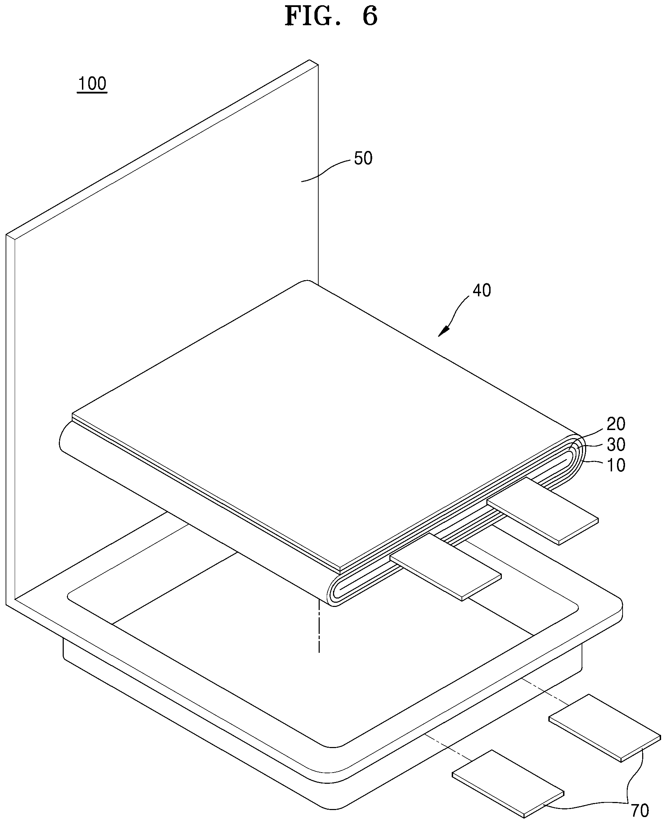

A lithium secondary battery, depending on its form, may be classified into a cylindrical-type, a prismatic-type, a pouch-type, a coin-type, and the like. FIGS. 3 to 6 are schematic diagrams showing a lithium secondary battery according to an embodiment, where FIG. 3 shows a cylindrical-type battery, FIG. 4 shows a prismatic-type battery, and FIGS. 5 and 6 show a pouch-type battery. Referring to FIGS. 3 to 6, a lithium secondary battery 100 may include an electrode assembly 40 having a separator 30 disposed between a cathode 10 and an anode 20, and a case 50 housing the electrode assembly 40. The cathode 10, the anode 20, and the separator 30 may be impregnated in an electrolyte (not shown). The lithium secondary battery 100 may include a sealing member 60 that seals the case 50, as shown in FIG. 3. Furthermore, as shown in FIG. 4, the lithium secondary battery 100 may include a cathode lead tab 411, a cathode terminal 412, an anode lead tab 421, and an anode terminal 422. As shown in FIGS. 5 and 6, the lithium secondary battery 100 may include an electrode tab 70, e.g., a cathode tab 71 and an anode tab 72, which act as an electrical channel for guiding an electric current generated at the electrode assembly 40 to the outside.

A lithium secondary battery according to an embodiment of the present disclosure may be applied to automobiles, mobile phones, and/or various types of electrical devices, but the present disclosure is not limited thereto.

All-Solid Battery

An all-solid battery may be, for example, a battery containing a solid electrolyte. The all-solid battery may include a solid electrolyte according to an embodiment.

An all-solid battery may include, for example, a cathode containing a cathode active material; an anode containing an anode active material; and a solid electrolyte layer disposed between the cathode and the anode, wherein at least one of the cathode, the anode, or the solid electrolyte layer may include a solid electrolyte according to an embodiment. For example, the all-solid battery may include a cathode active material layer, wherein the cathode active material layer may include a solid electrolyte according to an embodiment. For example, the all-solid battery may include an anode active material layer, wherein the anode active material layer may include a solid electrolyte according to an embodiment. The all-solid battery may include a solid electrolyte layer disposed between a cathode and an anode, wherein the solid electrolyte layer may include a solid electrolyte containing a compound represented by Formula 1. An all-solid battery may include, for example, a cathode active material layer, wherein the cathode active material layer may include a composite anode active material including a core including a cathode active material; and a first coating layer disposed on the core, wherein the first coating layer may include a solid electrolyte represented by Formula 1. An all-solid battery may include, for example, an anode active material layer, wherein the anode active material layer may include a composite anode active material including a core including an anode active material; and a second coating layer disposed on the core, wherein the second coating layer may include a solid electrolyte represented by Formula 1.

Type 1: All-solid battery with non-plated type anode

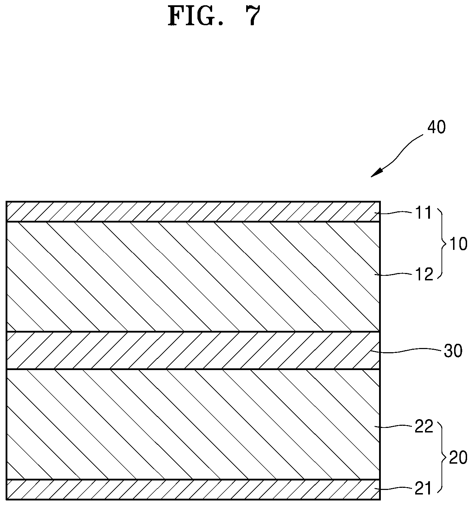

FIG. 7 is a schematic diagram of an all-solid battery including a non-plated type anode according to an example embodiment. In the all-solid battery including a non-plated type anode, during the initial charging, the initial charge capacity of the anode active material layer may be, for example, greater than 50 %, 60 % or greater, 70 % or greater, 80 % or greater, 90 % or greater, or 100 % or greater, with respect to the initial charge capacity of the cathode active material layer.

An all-solid type lithium battery may be prepared as follows.

First, a solid electrolyte layer may be prepared. The solid electrolyte layer may include a solid electrolyte. For example, the solid electrolyte layer may be prepared by mixing and drying a solid electrolyte containing a compound represented by Formula 1 and a binder, or may be prepared by pressing a solid electrolyte powder containing a compound represented by Formula 1 into a specific form. For example, the solid electrolyte layer may be prepared by mixing and drying a solid electrolyte containing a compound represented by Formula 1, sulfide and/or oxide solid electrolytes, and a binder, or may be prepared by pressing a solid electrolyte powder containing a compound represented by Formula 1 and sulfide and/or oxide solid electrolyte powder into a specific form. For example, the solid electrolyte layer may be prepared by mixing and drying sulfide and/or oxide solid electrolytes and a binder, or may be prepared by pressing sulfide and/or oxide electrolyte powder into a specific form.

For example, the solid electrolyte may be deposited using a film formation method, thereby forming a solid electrolyte layer, wherein the film formation method may be by blasting, aerosol deposition, cold spraying, sputtering, chemical vapor deposition, spraying, or the like. Additionally, the solid electrolyte layer may be formed by pressing the solid electrolyte. Additionally, the solid electrolyte layer may be formed by mixing and pressing a solid electrolyte, a solvent, and a binder or support. In this case, the solvent or support may be added to reinforce the strength of the solid electrolyte layer or to prevent a short-circuit of the solid electrolyte.

The binder included in the solid electrolyte layer may be, for example, styrene butadiene rubber ("SBR"), polytetrafluoroethylene, polyvinylidene fluoride, polyethylene, polyvinyl alcohol, and the like, but without being limited to the aforementioned materials, any binder available in the art may be used. The binder in the solid electrolyte layer may be the same as or different from the binders in the cathode layer and the anode layer.

The oxide solid electrolyte may be, for example, one or more of $Li_{1,x,y}Al_xTi_{2-x}Si_yP_{3-y}O_{12}$ ($0<x<2$ and $0\leq y<3$), $BaTiO_3$, $Pb(Zr_aTi_{1-a})O_3$ ("PZT", $0\leq a\leq 1$), $Pb_{1-x}La_xZr_{1-y}Ti_yO_3$ ("PLZT") ($0\leq x<1$ and $0\leq y<1$), $Pb(Mg_{1/3}Nb_{2/3})O_3$-$PbTiO_3$ ("PMN-PT"), $HfO_2$, $SrTiOs$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al_aGa_{1-a})_x(Ti_bGe_{1-b})_{2-x}Si_yP_{3-y}O_{12}$

($0 \leq x \leq 1$, $0 \leq y \leq 1$, $0 \leq a \leq 1$, and $0 \leq b \leq 1$), $Li_xLa_yTiO_3$ ($0 < x < 2$ and $0 < y < 3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, or $Li_{3+x}La_3M_2O_{12}$ (M is Te, Nb, or Zr, and x is an integer of 1 to 10). The solid electrolyte may be produced by methods such as a sintering method. The oxide solid electrolyte may be, for example, a garnet-type solid electrolyte of $Li_7La_3Zr_2O_{12}$ ("LLZO"), $Li_{3+x}La_3Zr_{2-a}M_aO_{12}$ ("M-doped LLZO", M is Ga, W, Nb, Ta, or Al, $0 < a < 2$ and x is in a range of 1 to 10), or a combination thereof.

Examples of the sulfide solid electrolyte include lithium sulfide, silicon sulfide, phosphorus sulfide, boron sulfide, or a combination thereof. Sulfide solid electrolyte particles may include $Li_2S$, $P_2S_5$, $SiS_2$, $GeS_2$, $B_2S_3$, or a combination thereof. The sulfide solid electrolyte particles may be $Li_2S$ or $P_2S_5$. The sulfide solid electrolyte particles are known to have a higher lithium-ion conductivity than other inorganic compounds. For example, the sulfide solid electrolyte may include $Li_2S$ and $P_2S_5$. If sulfide solid electrolyte materials constituting the solid electrolyte includes $Li_2S$-$P_2S_5$, the mixing molar ratio of $Li_2S$ to $P_2S_5$ may be, for example, in a range of about 50:50 to about 90:10.

The sulfide solid electrolyte may also include inorganic solid electrolytes that are prepared by adding $Li_3PO_4$, a halogen, a halogen compound, $Li_{2+2x}Zn_{1-x}GeO_4$ ($0 \leq x \leq 1$) ("LISICON"), $Li_{3+y}PO_{4-x}N_x$ ($0 \leq x \leq 1$, $0 \leq y \leq 1$) ("LIPON"), $Li_{3.25}Ge_{0.25}P_{0.75}S_4$ ("ThioLISICON"), $Li_2O$-$Al_2O_3$-$TiO_2$-$P_2O_5$ ("LATP") or the like, to an inorganic solid electrolyte of $Li_2S$-$P_2S_5$, $SiS_2$, $GeS_2$, $B_2S_3$, or a combination thereof.

Non-limiting examples of the sulfide solid electrolyte materials include $Li_2S$-$P_2S_5$; $Li_2S$-$P_2S_5$-$LiX$ (X is a halogen element, e.g., Cl, Br, or I); $Li_2S$-$P_2S_5$-$Li_2O$; $Li_2S$-$P_2S_5$-$Li_2O$-$LiI$; $Li_2S$-$SiS_2$; $Li_2S$-$SiS_2$-$LiI$; $Li_2S$-$SiS_2$-$LiBr$; $Li_2S$-$SiS_2$-$LiCl$; $Li_2S$-$SiS_2$-$B_2S_3$-$LiI$; $Li_2S$-$SiS_2$-$P_2S_5$-$LiI$; $Li_2S$-$B_2S_3$; $Li_2S$ -$P_2S_5$-$Z_mS_n$ (m and n are each a positive number, and Z is Ge, Zn, or Ga); $Li_2S$-$GeS_2$; $Li_2S$-$SiS_2$-$Li_3PO_4$; or $Li_2S$-$SiS_2$-$Li_pMO_q$ (wherein p and q are each a positive number, and M is P, Si, Ge, B, Al, Ga, or In). In this regard, the sulfide solid electrolyte material may be prepared by subjecting a starting material (e.g., $Li_2S$, $P_2S_5$, etc.) of the sulfide solid electrolyte material to a treatment, such as melt quenching, mechanical milling, and the like. In addition, a calcination process may be performed following the above treatment.

In addition, the sulfide solid electrolyte may be, among the sulfide solid electrolyte materials described above, a material that contains at least sulfur (S), phosphorus (P), and lithium (Li), as its constitutive elements. For example, the sulfide solid electrolyte may be a material including $Li_2S$-$P_2S_5$. If a material including $Li_2S$-$P_2S_5$ is used as a sulfide solid electrolyte material, the mixing molar ratio of $Li_2S$ to $P_2S_5$ may be, for example, in a range of about 50:50 to about 90:10.

The sulfide solid electrolyte may be a compound having an argyrodite crystal structure. The compound having an argyrodite crystal structure may include, for example, one or more of $Li_{7-x}PS_{6-x}Cl_x$ ($0 < x < 2$), $Li_{7-x}PS_{6-x}Br_x$ ($0 < x < 2$), or $Li_{7-x}PS_{6-x}I_x$ ($0 < x < 2$). For example, the sulfide solid electrolyte included in the solid electrolyte may be an argyrodite-type compound including one or more of $Li_6PS_5Cl$, $Li_6PS_5Br$, or $Li_6PS_5I$. As used herein, argyrodite is a silver germanium sulfide mineral that can be referred to using the formula Ag8GeS6. As used herein, the term "argyrodite compound" means that the compound is isostructural with argyrodite. Next, a cathode may be prepared.

The cathode may be prepared by having a cathode active material layer including a cathode active material formed on a cathode current collector. The cathode active material layer may be prepared by a vapor phase method, liquid phase process or a solid-phase method. The vapor phase method may include methods such as pulse laser deposition (PLD), sputtering deposition, and chemical vapor deposition (CVD), but without being limited to the aforementioned methods, any method available in the art may be used. The liquid phase process or solid phase method may include methods such as sintering, a sol-gel technique, a doctor blade technique, screen printing, slurry casting, and powder pressing, but without being limited to the aforementioned methods, any method available in the art may be used.

The cathode active material layer may include a cathode active material. The cathode active material and cathode current collector may be selected from the aforementioned materials used in a lithium-ion battery.

The cathode active material layer may further include a binder, a conductive material, and the like. The binder and conductive material may be selected from the aforementioned materials used in a lithium-ion battery.

The cathode active material layer may include a solid electrolyte according to an embodiment. A protective layer containing a solid electrolyte according to an embodiment may be disposed on the cathode active material layer.

Next, an anode may be prepared.

The anode may be prepared in the same manner as the cathode except that an anode active material is used in place of the cathode active material. The anode may be prepared by having an anode active material layer including an anode active material formed on an anode current collector.

The anode active material layer may include an anode active material. The anode active material may be selected from the aforementioned materials used in the lithium-ion battery. The anode active material layer may be, for example, lithium metal, a lithium metal alloy, or a combination thereof.

The anode active material layer may further include a binder, a conductive material, and the like. The binder and conductive material may be selected from the aforementioned materials used in the lithium-ion battery.

The anode active material layer may include a solid electrolyte according to an embodiment. A protective layer containing a solid electrolyte according to an embodiment may be disposed on the anode active material layer.

Referring to FIG. 7, an all-solid battery 40 may include a solid electrolyte layer 30, a cathode 10 disposed on one side of the solid electrolyte layer 30, and an anode 20 disposed on the other side of the solid electrolyte layer 30. The cathode 10 may include a cathode active material layer 12 in contact with the solid electrolyte layer 30, and a cathode current collector 11 in contact with the cathode active material layer 12. The anode 20 may include an anode active material layer 22 in contact with the solid electrolyte layer 30, and an anode current collector 21 in contact with the anode active material layer 22. For the all-solid battery 40, for example, the cathode active material layer 12 and the anode active material layer 22 may be formed on each side of the solid electrolyte layer 30, and the cathode current collector 11 and the anode current collector 21 may be formed on the cathode active material layer 12 and the anode active material layer 22, respectively, to thereby complete the preparation of an all-solid type battery 40. Alternatively, the anode active material layer 22, the solid electrolyte layer 30, the cathode active material layer 12, and the cathode current collector 11 may be sequentially laminated on the anode current collector 21, to thereby complete the preparation of the all-solid battery 40.

Type 2: All-solid battery with plated-type anode

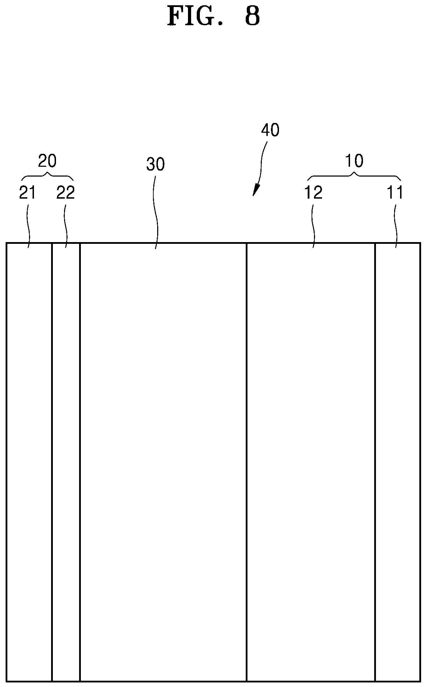

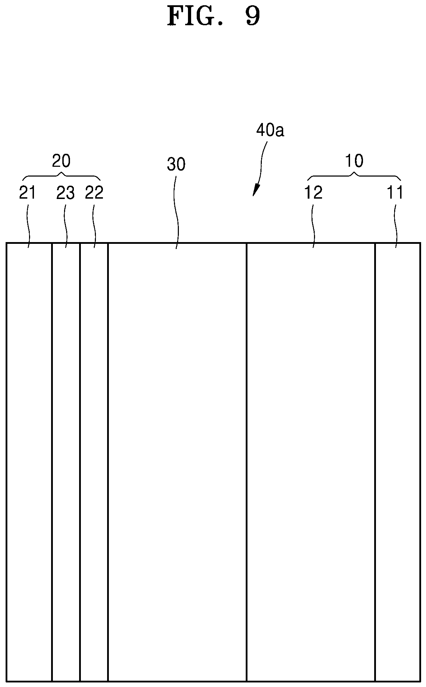

FIGS. 8 and 9 are schematic diagrams of an all-solid battery including a plated-type anode according to an example embodiment. In the all-solid battery including a plated-type anode, during the initial charging, the initial charge capacity of the anode active material layer may be, for example, 50 % or less, 40 % or less, 30 % or less, 20 % or less, 10 % or less, 5 % or less, or 1% or less, with respect to the initial charge capacity of the cathode active material layer. The all-solid battery 40 may include, for example, the cathode 10 including the cathode active material layer 12 disposed on the cathode current collector 11; the anode 20 including the anode active material layer 12 disposed on the anode current collector 21; and the electrolyte layer 30 disposed between the cathode 10 and the anode 20, wherein the cathode active material layer 12 and/or the electrolyte layer 30 may include a solid electrolyte.

An all-solid battery according to another embodiment may be prepared as follows.

The cathode and solid electrolyte layer may be prepared following the same process as in the all-solid secondary battery provided with the non-plated type anode described above.

Next, an anode may be prepared.

Referring to FIGS. 8 and 9, an anode 20 may include an anode current collector 21 and an anode active material layer 22 disposed on the anode current collector 21, wherein the anode active material layer 22 may include, for example, an anode active material and a binder.

The anode active material included in the anode active material layer 22 may have, for example, a particulate form. The anode active material having a particulate form may have an average particle diameter of, for example, 4 $\mu$m or less, 3 $\mu$m or less, 2 $\mu$m or less, 1 $\mu$m or less, or 900 nm or less. The average particle diameter of the anode active material having a particulate form may be, for example, from about 10 nanometers (nm) to about 4 $\mu$m, about 10 nm to about 3 $\mu$m, about 10 nm to about 2 $\mu$m, about 10 nm to about 1 $\mu$m, or about 10 nm to about 900 nm. With the anode active material having an average particle diameter within the above ranges, reversible absorption and/or desorption of lithium during charging/discharging may be facilitated. The average particle diameter of the anode active material may be, for example, a median particle diameter (D50) as measured by a laser-type particle size distribution analyzer.

The anode active material included in the anode active material layer 22 may include, for example, at least one of a carbon-containing anode active material or a metal or metalloid anode active material.

The carbon-containing anode active material may be, for example, an amorphous carbon. Examples of the amorphous carbon include carbon black (CB), acetylene black (AB), furnace black (FB), Ketjen black (KB), graphene, or the like; however, the carbon-containing anode active material is not limited to the aforementioned examples and may be any material that is categorized as amorphous carbon in the art. Amorphous carbon is carbon with no crystalline structure or with an extremely low degree of crystallinity and as such, may be distinct from crystalline carbon or graphitic carbon.

The metal or metalloid anode active material may include one or more of gold (Au), platinum (Pt), palladium (Pd), silicon (Si), silver (Ag), aluminum (Al), bismuth (Bi), tin (Sn), or zinc (Zn), but without being limited thereto, may be any material in the art that is used as a metal anode active material or a metalloid anode active material that forms an alloy or a compound with lithium. For example, nickel (Ni) does not form an alloy with lithium and is therefore not regarded as a metal anode active material.

The anode active material layer 22 may include a single anode active material, or a mixture of multiple different types of anode active materials among the aforementioned anode active materials. For example, the anode active material layer 22 may include amorphous carbon alone, or may include one or more of gold (Au), platinum (Pt), palladium (Pd), silicon (Si), silver (Ag), aluminum (Al), bismuth (Bi), tin (Sn), or zinc (Zn). Alternatively, the anode active material layer 22 may include a mixture of amorphous carbon with one or more of gold (Au), platinum (Pt), palladium (Pd), silicon (Si), silver (Ag), aluminum (Al), bismuth (Bi), tin (Sn), or zinc (Zn). The mixing ratio of amorphous carbon to the metal(s) described herein, such as gold (Au) in such a mixture, may be, by weight, for example, about 10:1 to about 1:2, about 5:1 to about 1:1, or about 4:1 to about 2:1, but without being necessarily limited thereto, may be selected according to a required feature of the all-solid battery 40. Because the anode active material has the aforementioned compositions, the cycling performance of the all-solid battery 40 may further improve.

The anode active material included in the anode active material layer 22 may include, for example, a mixture of first particles and second particles, the first particles being composed of amorphous carbon, and the second particles being composed of a metal or a metalloid. Examples of the metal or metalloid include gold (Au), platinum (Pt), palladium (Pd), silicon (Si), silver (Ag), aluminum (Al), bismuth (Bi), tin (Sn), zinc (Zn), or the like. Alternatively, the metalloid may be a semiconductor. The amount of the second particles may be about 8 wt% to about 60 wt%, about 10 wt% to about 50 wt%, about 15 wt% to about 40 wt%, or about 20 wt% to about 30 wt%, with respect to the total weight of the mixture. If the amount of the second particles is within the aforementioned ranges, for example, the cycling performance of the all-solid battery 40 may further improve.

The binder included in the anode active material layer 22 may be, for example, styrene butadiene rubber ("SBR"), polytetrafluoroethylene, polyvinylidene fluoride, polyethylene, a vinylidene fluoride/hexafluoropropylene copolymer, polyacrylonitrile, polymethylmethacrylate, or the like. However, the binder is not limited to the aforementioned examples and may be any material available as a binder in the art. The binder may be composed of a single type of binder, or multiple binders of different types.

Because the anode active material layer 22 includes a binder, the anode active material layer 22 may be stabilized on the anode current collector 21. Further, crack formation in the anode active material layer 22 may be suppressed, despite volume changes and/or displacement of the anode active material layer 22 during charging and discharging processes. For example, if the anode active material layer 22 does not contain any binder, the anode active material layer 22 may be easily delaminated from the anode current collector 21. At an area where the anode current collector 21 is exposed due to delamination of the anode active material layer 22 from the anode current collector 21, the anode current collector 21 and the solid electrolyte layer 30 may come in contact with each other, thus increasing the likelihood of a short circuit occurring. For example, the anode active material layer 22 may be prepared by applying and drying a slurry having dispersed therein materials forming the anode active material layer 22 on the anode current collector 21. By including a binder in the anode active material layer 22, stable dispersion of the anode active materials within the slurry may be achieved. For example, if applying the slurry onto the anode current collector 21 by a screen-printing method, it may be possible to prevent the screen from clogging (for example, clogging by agglomerates of the anode active material).

The anode active material layer 22 may further include other additives used in an all-solid battery, such as a filler, a coating agent, a dispersing agent, an ionically conductive aid, or the like.

For example, the anode active material layer 22 may have a thickness of 50 % or less, 40 % or less, 30 % or less, 20 % or less, 10 % or less, or 5 % or less, with respect to a thickness of the cathode active material layer 12. For example, the anode active material layer 22 may have a thickness of about 1 $\mu$m to about 20 $\mu$m, about 2 $\mu$m to about 10 $\mu$m, or about 3 $\mu$m to about 7 $\mu$m. If the anode active material layer 22 is excessively thin, the anode active material layer 22 may be disintegrated by lithium dendrites formed between the anode active material layer 22 and the anode current collector 21, thus making it difficult to improve the cycling performance of the all-solid battery 40. If the thickness of the anode active material layer 22 excessively increases, the energy density of the all-solid battery 40 may decrease while the internal resistance of the all-solid battery 40 by the anode active material layer 22 increases, thus making it difficult to improve the cycling performance of the all-solid battery 40.

If the thickness of the anode active material layer 22 decreases, for example, the charge capacity of the anode active material layer 22 also decreases. For example, the charge capacity of the anode active material layer 22 may be 50 % or less, 40 % or less, 30 % or less, 20 % or less, 10 % or less, 5 % or less, and 2 % or less, or 1 % or less, with respect to the charge capacity of the cathode active material layer 12. The charge capacity of the anode active material layer 22 may be, for example, about 0.1 % to about 50 %, about 0.1 % to about 40 %, about 0.1 % to about 30 %, about 0.1 % to about 20 %, about 0.1 % to about 10 %, about 0.1 % to about 5 %, or about 0.1 % to about 2 %, with respect to the charge capacity of the cathode active material layer 12. If the initial charge capacity of the anode active material layer 22 is excessively small, the thickness of the anode active material layer 22 becomes extremely small, and thus, the anode active material layer 22 may be disintegrated by lithium dendrites formed between the anode active material layer 22 and the anode current collector 21 during repeated charging/discharging processes, thus making it difficult to improve the cycling performance of the all-solid battery 40. If the charge capacity of the anode active material layer 22 excessively increases, the energy density of the all-solid battery 40 may decrease while the internal resistance of the all-solid battery 40 by the anode active material layer 22 increases, thus making it difficult to improve the cycling performance of the all-solid battery 40.

The charge capacity of the cathode active material layer 12 may be obtained by multiplying the charge specific capacity (milliamperes per gram, mAh/g) of a cathode active material by the mass of the cathode active material in the cathode active material layer 12. If multiple types of cathode active materials are used, the product of charge specific capacity $\times$ mass may be calculated for each cathode active material, and the sum of these products may be defined as initial charge capacity of the cathode active material layer 12. The charge capacity of the anode active material layer 22 may also be calculated in the same manner. For example, the charge capacity of the anode active material layer 22 may be obtained by multiplying the charge specific capacity (mAh/g) of an anode active material by the mass of the anode active material in the anode active material layer 22. If multiple types of anode active materials are used, the product of charge specific capacity $\times$ mass may be calculated for each anode active material, and the sum of these products may be defined as the capacity of the anode active material layer 22. For example, the charge specific capacity of each of the cathode active material and the anode active material may be a capacity estimated using an all-solid half-cell using lithium metal as counter electrode. By the charge capacity measurement using an all-solid half-cell, the charge capacity of each of the cathode active material layer 12 and the anode active material layer 22 may be directly measured. Charge specific capacity may be obtained by dividing the measured charge capacity by the mass of the corresponding active material. In other embodiments, the charge capacity of each of the cathode active material layer 12 and the anode active material layer 22 may be the initial charge capacity measured during the first cycle charging.

Referring to FIG. 9, an all-solid battery 40a may further include, for example, a metal layer 23 disposed between an anode current collector 21 and an anode active material layer 22. The metal layer 23 may be a metal foil or a plated metal layer. The metal layer 23 may include lithium or a lithium alloy. Accordingly, the metal layer 23 may act as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but without being limited thereto, may be any material available as a lithium alloy in the art. The metal layer 23 may be composed of lithium or one of such alloys, or may be composed of various types of alloys.

The metal layer 23 is not limited to any particular thickness, but may have a thickness of, for example, about 1 μm to about 200 μm, about 1 μm to about 100 μm, about 1 μm to about 70 μm, about 1 μm to about 50 μm, about 1 μm to about 30 μm, or about 1 μm to about 20 μm. If the metal layer 23 is excessively thin, the metal layer 23 may fail to sufficiently function as a lithium reservoir. If the metal layer 23 is excessively thick, the all-solid battery 40a may have an increased mass and volume and show rather deteriorated cycling performance. The metal layer 23 may be, for example, a metal foil having a thickness in the aforementioned ranges.

In the all-solid battery 40a, the metal layer 23 may be, for example, disposed between the anode current collector 21 and the anode active material layer 22 prior to assembly of the all-solid battery 40a, or the metal layer 23 may be plated between the anode current collector 21 and the anode active material layer 22 after assembly of the all-solid battery 40a. In a case in which the metal layer 23 is positioned between the anode current collector 21 and the anode active material layer 22 prior to assembly of the all-solid battery 40a, the metal layer 23, due to being a metal layer containing lithium, may act as a lithium reservoir. For example, prior to assembly of the all-solid battery 40a, a lithium foil may be positioned between the anode current collector 21 and the anode active material layer 22. As a result, the cycling performance of the all-solid battery 40a including the metal layer 23 may further improve. In a case in which the metal layer 23 is to be plated by charging after assembly of an all-solid battery 40a, because the metal layer 23 is absent in the all-solid battery 40a at the time of its assembly, the energy density of the all-solid battery 40a may increase. For example, if charging the all-solid battery 40a, the charging may be performed to exceed the charge capacity of the anode active material layer 22. The anode active material layer 22 may be then overcharged. At the beginning of the charging, lithium may be absorbed into the anode active material layer 22. The anode active material included in the anode active material layer 22 may form an alloy or a compound with lithium ions migrated from the cathode 10. Charging to exceed the capacity of the anode active material layer 22 may cause lithium plating, for example, on the back surface of the anode active material layer 22, for example, between the anode current collector 21 and the anode active material layer 22, and the plated lithium then may form a metal layer that corresponds to the metal layer 23. The metal layer 23 may be a metal layer mainly composed of lithium (i.e., metal lithium). This result may be obtained from the fact that the anode active material included in the anode active material layer 22 is formed of a material that forms an alloy or compound with lithium. During discharge, lithium in metal layers, e.g., the anode active material layer 22 and the metal layer 23, may be ionized and migrate toward the cathode 10. Therefore, lithium may be used as an anode active material in the all-solid battery 40a. Additionally, because the anode active material layer 22 covers the metal layer 23, the anode active material layer 22 may function as a protective layer for a metal layer, e.g., the metal layer 23, while suppressing plating and growth of lithium dendrites. Therefore, short circuits and capacity fading of the all-solid battery 40a may be suppressed, and consequently, the cycling performance of the all-solid battery 40a may improve. Further, in a case in which the metal layer 23 is positioned by charging after assembly of the all-solid battery 40a, the anode current collector 21, the anode active material layer 22, and the region therebetween may be, for example, a Li-free region that does not include lithium (Li) while the all-solid battery 40a is in the initial state or in a state after discharging.

The anode current collector 21 may be formed of a material that does not react with lithium, for example, does not form an alloy or a compound with lithium. Examples of the material forming the anode current collector 21 include copper (Cu), stainless steel, titanium (Ti), iron (Fe), cobalt (Co), nickel (Ni), or the like. However, the material forming the anode current collector 21 is not necessarily limited to the aforementioned materials but may be any material available as an electrode current collector in the art. The anode current collector 21 may be formed of one type of the aforementioned metals, an alloy of two or more types metals thereof, or a covering material. The anode current collector 21 may be, for example, a plate type or a foil type.

The all-solid battery 40, 40a may further include, for example, a thin film (not shown) containing an element capable of forming an alloy with lithium on the anode current collector 21. The thin film may be positioned between the anode current collector 21 and the anode active material layer 22. The thin film may include, for example, an element capable of forming an alloy with lithium. Examples of the element capable of forming an alloy with lithium include gold (Au), silver (Ag), zinc (Zn), tin (Sn), indium (In), silicon (Si), aluminum (Al), bismuth (Bi), or the like, but without being necessarily limited thereto, any element capable of forming an alloy with lithium in the art may be utilized. The thin film may be composed of one of the aforementioned metals or may be composed of an alloy of various kinds of metals. With the thin film disposed on the anode current collector 21, the form of the metal layer 23 being plated between the thin film 24 and the anode active material layer 22 may be further flattened, and the cycling performance of the all-solid battery 40a may further improve.

For example, the thin film may have a thickness of about 1 nm to about 800 nm, about 10 nm to about 700 nm, about 50 nm to about 600 nm, or about 100 nm to about 500 nm. If the thickness of the thin film is less than 1 nm, it may be difficult to achieve functions attributable to the thin film. If the thin film is excessively thick, the thin film may absorb lithium by itself, decreasing the amount of lithium plated at the anode, which as a result may decrease the energy density of an all-solid battery and cause the cycling performance of the all-solid battery 40, 40a to deteriorate. The thin film may be positioned on the anode current collectors 21 by a vacuum deposition method, a sputtering method, a plating method or the like, but is not limited to the aforementioned methods and may be any method available in the art that is capable of forming the thin film.

Multilayer Ceramic (MLC) Battery

A MLC battery may include, for example, a plurality of cathode layers; a plurality of anode layers alternately disposed between the plurality of cathode layers; and solid electrolyte layers alternately disposed between the plurality of cathode layers and the plurality of anode layers. The solid electrolyte included in the MLC battery may be, for example, an oxide solid electrolyte. For example, the solid electrolyte may include a solid electrolyte containing a compound represented by Formula 1.

A MLC battery may be, for example, a sintered product of a laminated structure in which a cathode active material precursor, an anode active material precursor, and a solid electrolyte precursor are sequentially laminated, or may be a sintered product of a laminated structure in which a cathode active material, an anode active material, and a solid electrolyte are sequentially laminated. A MLC battery may be provided with, for example, a stacked structure in which a plurality of unit cells are laminated with cathode active material layers facing anode active material layers and vice versa, while each unit cell includes a cathode layer including a cathode active material layer; a solid electrolyte layer; and an anode layer including an anode active material layer which are sequentially continuously disposed. For example, the MLC battery may further include a cathode current collector and/or an anode current collector. If the MLC battery includes a cathode current collector, a cathode active material layer may be disposed on both sides of the cathode current collector. If the MLC battery includes an anode current collector, an anode active material layer may be disposed on both sides of the anode current collector. Because the MLC battery further includes a cathode current collector and/or an anode current collector, the high-rate capability of the battery may further improve. In the MLC battery, unit cells may be laminated together by providing a current collector layer on any one or both of the uppermost layer and the lowermost layer of the laminated structure, or by introducing a metal layer into the laminated structure. The MLC battery or thin-film battery may be a small or ultra-small battery that can be applied, for example, as a power source for applications of Internet of Things (IoT) or a power source for wearable devices. The MLC battery or thin film battery may also be applied to medium- to large-sized batteries in an electric vehicle (EV), an energy storage system (ESS), or the like.

The anode included in the MLC battery may include, for example, one or more anode active materials of a lithium metal phosphate, a lithium metal oxide, a metal oxide, or a carbon-containing anode active material.

The carbon-containing anode active materials include crystalline carbon, amorphous carbon, a porous carbon or a combination thereof.

Examples of crystalline carbon include natural graphite or artificial graphite. Amorphous carbon is, for example, carbon black (CB), acetylene black (AB), furnace black (FB), Ketjen black (KB), graphene, soft carbon or hard carbon, mesophase pitch carbonization product, calcined coke, etc. The anode active material may be, for example, a compound selected from $Li_{4/3}Ti_{5/3}O_4$

[0196] , $LiTiO_2$, $LiM1_sM2_tO_u$ (M1 and M2 are each a transition metal, and s, t, and u are each any positive number), $TiO_x$ ($0<x\leq3$), or $Li_xV_2(PO_4)_3$ ($0<x\leq5$). The anode active material may be, in particular, $Li_{4/3}Ti_{5/3}O_4$, $LiTiO_2$, or the like.

The cathode included in the MLC battery may include a cathode active material. The cathode active material may be selected from the aforementioned cathode active materials used in a lithium-ion battery. The cathode active material may include, for example, one or more of lithium metal phosphate or lithium metal oxide. Examples of the cathode active material include lithium cobalt oxide, lithium iron phosphate, lithium nickel cobalt manganese oxide, lithium nickel cobalt aluminum oxide, lithium nickel cobalt manganese aluminum oxide, or a combination thereof.

The current collector layer may function as a cathode current collector and/or an anode current collector. The current collector layer may be, for example, made of any metal of Ni, Cu, Ag, Pd, Au, or Pt. The current collector layer may be made of, for example, an alloy containing any one of Ni, Cu, Ag, Pd, Au, or Pt. The alloy may be, for example, an alloy of two or more of Ni, Cu, Ag, Pd, Au, or Pt. The alloy may be, for example, an Ag/Pd alloy. Such a metal and alloy may be a single type or a mixture of two or more types. The current collector layer as cathode current collector and the current collector layer as anode current collector may utilize the same material or a different material from each other. Since an alloy or mixed powder containing Ag and Pd, by adjusting its mixing ratio, can adjust its melting point to any melting point between the melting point of silver (962 °C) and the melting point of palladium (1,550 °C), the melting point may be adjusted to a batch-sintering temperature. In addition, the alloy or mixed powder containing Ag and Pd, due to having high electronic conductivity, may suppress an increase of battery internal resistance.

The solid electrolyte may be, for example, an oxide solid electrolyte. The oxide solid electrolyte may be selected from the aforementioned materials used in the all-solid battery. For example, the solid electrolyte may be a lithium compound selected from $Li_{3.25}Al_{0.25}SiO_4$, $Li_3PO_4$, and $LiP_xSi_yO_z$ (in the formula, x, y, and z each are any positive number). The solid electrolyte may be, for example, $Li_{3.5}P_{0.5}Si_{0.5}O_4$.

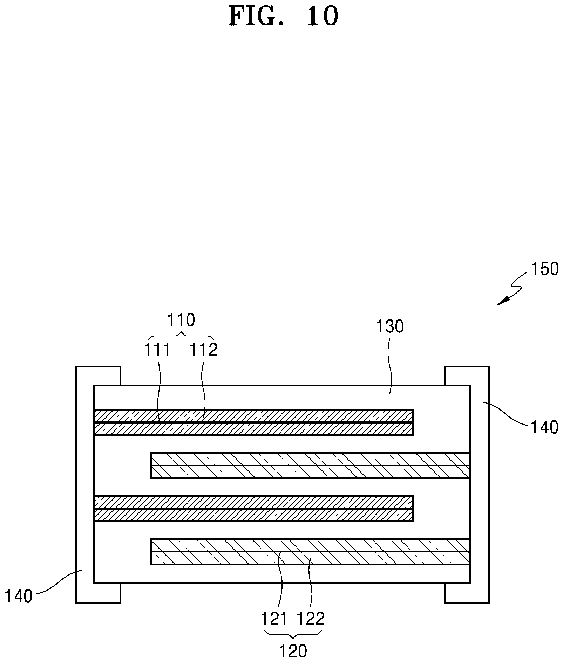

FIG. 10 is a cross-sectional schematic diagram of an MLC battery 150 according to an embodiment. Referring to FIG. 10, a cathode active material layer 112 may be disposed on both sides of a cathode current collector 111 to form a cathode 110. An anode active material layer 122 may be laminated on both sides of an anode current collector 121 to form an anode 120. A solid electrolyte 130 may be disposed between the cathode 110 and the anode 120. An external electrode 140 may be formed on both ends of a battery body. The external electrode 140 may be connected to the cathode 110 and the anode 120, each of which has a tip portion exposed outside the battery body and act as an external terminal that electrically connects the cathode 110 and the anode 120 to an external element. One of a pair of external electrodes 140 may have one end thereof connected to the cathode 110 exposed outside the battery body, and the other one of the pair of external electrodes 140 may have the other end thereof connected to the anode 120 exposed outside the battery body. An MLC battery 150 may be prepared by having an oxide electrode and a solid electrolyte sequentially stacked and then heat-treated at the same time.

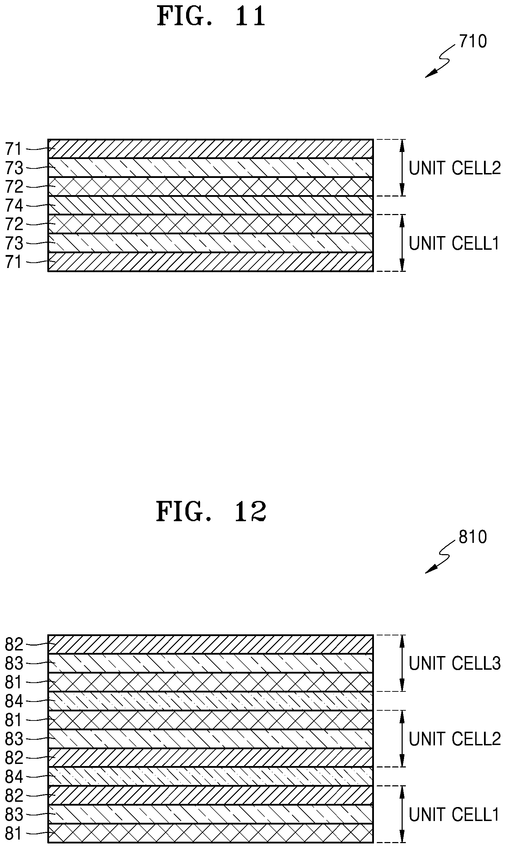

FIGS. 11 and 12 schematically show a cross-sectional structure of an MLC battery according to another embodiment. As shown in FIG. 11, in the MLC battery 710, a unit cell 1 and a unit cell 2 may be laminated through an internal current collector layer 74. Each of the unit cell 1 and the unit cell 2 may be composed of a cathode layer 71, a solid electrolyte layer 73, and an anode layer 72, sequentially laminated. A unit cell 1, a unit cell 2, and an inner current collector layer 74 may be laminated such that an anode layer 72 of the unit cell 2 is adjacent to one side of an inner current collector layer 74 (top surface in FIG. 11) and an anode layer 72 of the unit cell 1 is adjacent to the other side of the inner current collector layer 74 (bottom surface in FIG.

11). The inner current collector layer 74, although illustrated in FIG. 11 as being positioned in contact with the anode layer 72 of each of the unit cell 1 and the unit cell 2, may also be positioned in contact with the cathode layer 71 of each of the unit cell 1 and the unit cell 2. The inner current collector layer 74 may include an electronically conductive material. The inner current collector layer 74 may further include an ionically conductive material. Further including an ionically conductive material may improve voltage stability characteristics. Because both sides of the inner current collector layer 74 has the same polarity in an MLC battery 710, a monopolar-type MLC battery 710, which has a plurality of unit cells connected in parallel to each other by the inner current collector layer 74 inserted therein, may be obtained. As a result, a high-capacity MLC battery 710 may be obtained. Because the inner current collector layer 74 inserted between the unit cell 1 and the unit cell 2 contains an electronically conductive material in the MLC battery 710, a parallel electrical connection between two adjacent unit cells may become possible and at the same time, an ionically conductive connection between the cathode layer 71 or anode layer 72 in two adjacent unit cells may become possible. Because electric potentials of adjacent anode layers 71 or cathode layers 72 can be averaged through the inner current collector layer 74, a stable output voltage may be obtained. In addition, an external current collecting member, such as a tab, may be omitted, and a parallel electrical connection between unit cells constituting the MLC battery 710 may become possible. As a result, the MLC battery 710 having excellent space efficiency and cost-effectiveness may be obtained. Referring to FIG. 12, a laminated structure may contain a cathode layer 81, an anode layer 82, a solid electrolyte layer 83, and an inner current collector layer 84. The laminated structure may be laminated and thermally compressed to form a MLC battery stack 810. The cathode layer 81 may be composed of a single cathode layer sheet, and the anode layer 82 may be composed of two anode layer sheets.

Method of Preparing Solid Electrolyte

A method of preparing a solid electrolyte according to an embodiment may include: mixing a metal precursor including at least one of iron (Fe), chromium (Cr), lanthanum (La), or thallium (Tl), a lithium precursor, a silicon precursor, a boron precursor, and a solvent to obtain a mixture; first heat-treating the mixture to provide a first heat-treated mixture; second heat-treating the first heat-treated mixture to provide a product; and quenching the product to provide the solid electrolyte.

In the obtaining of the mixture, the respective amounts of the metal precursor, the lithium precursor, the silicon precursor, and the boron precursor may be stoichiometrically controlled to produce a desired oxide composition. The mixing of the metal precursor, the lithium precursor, the silicon precursor, the boron precursor, and the solvent to provide the mixture may be performed by stirring (mechanical stirring, etc.),

The metal precursor containing at least one of iron (Fe), chromium (Cr), lanthanum (La), or thallium (Tl) may utilize, for example, $Fe_2O_3$, $Cr_2O_3$, $La_2O_2$, or $Tl_2O_3$.

The lithium precursor may utilize one or more of $Li_2O$, $Li_2CO_3$, $LiCl$, $LiNOs$, or $Li(OH)$. In addition, the silicon precursor may utilize tetraethyl orthosilicate, $SiO_2$, or a combination thereof, and the boron precursor may be at least one of $H_3BO_3$ or $B_2O_3$. A raw material containing lithium and boron may include $Li_3BO_3$, and a raw material containing lithium and silicon may include $Li_4SiO_4$.

The solvent used may be deionized water, an organic solvent, or a combination thereof.

Using an organic solvent as the solvent may prevent dissolution of lithium (Li) components and may obtain a mixture of a uniform composition.

The organic solvent may be one or more of alcohol-based solvents, ketonebased solvents, ester-based solvents, glycol ether-based solvents, hydrocarbon-based solvents, ether solvents, glycol-based solvents, or amine-based solvents. For example, the organic solvent may be at least one of alcohol-based solvents, such as methanol, ethanol, butanol, hexanol, benzyl alcohol, or isopropyl alcohol; ketonebased solvents, such as acetone, methyl ethyl ketone, methyl isobutyl ketone, or cyclohexanone; ester-based solvents, such as methyl acetate, ethyl acetate, or butyl acetate; glycol ether-based solvents, such as propylene glycol monomethyl ether, ethylene glycol monoethyl ether, ethyl glycol monobutyl ether, 3-methoxy-3-methyl-1-butanol, or diethylene glycol monobutyl ether; hydrocarbon-based solvents, such as benzene, toluene, xylene, cyclohexane, methylcyclohexane, ethylcyclohexane, mineral oil, n-paraffin, or iso-paraffin; ether solvents, such as 1,3-dioxolane, 1,4-dioxane, or tetrahydrofuran; glycol-based solvents, such as ethylene glycol, diethylene glycol, propylene glycol, or polyethylene glycol; or amine-based solvents, such as monoethanolamine, diethylamine, triethanolamine, N-methyl-2-pyrrolidone, 2-amino-2-methyl-1-propanol, or N, N-dimethylformamide.

Through the first heat-treating, the second heat-treating, and the quenching process, a glassified oxide may be obtained.

The second heat-treating may be performed at a greater temperature than the first heat-treating, the first heat-treating may be a pre-heat treatment and performed at a temperature of about 200 °C to about 450 °C, the second heat-treating may be a heat treatment process to form glass, and the second heat-treating may be performed at a temperature of about 700 °C to about 1,000 °C.

During the quenching, the cooling rate may be about $10^2$ Kelvins per second (K/s) to about $10^5$ K/s. If the quenching is performed at the aforementioned cooling rates, a solid electrolyte having a glass oxide having a desired property may be prepared.

In the present disclosure, if each precursor is in a molten state, the quenching may be performed through any one of water atomization, gas atomization, centrifugal atomization, twin roll spinning, or melt spinning. If the raw materials are in a gas state, the quenching may be performed through one or more cooling mediums among a quench gas, a reactor inner wall, or a capture tube.

Prior to the first heat-treating, drying the mixture to provide a dried mixture may be performed, wherein the drying may be performed at a temperature of about 50 °C to about 90 °C. During this drying process, the solvent may be removed.

A solid electrolyte according to an embodiment may provide a solid electrolyte which uses an oxide having an amorphous state and thus, even without an additional sintering treatment for densification, exhibits excellent mechanical performance and has excellent electrochemical stability and chemical stability, while having high ionic conductivity. Such solid electrolytes may be utilized as solid electrolyte components for a solid secondary battery.

Hereinbelow, the present disclosure will be described in greater detail in conjunction with Examples and Comparative Examples, but is not limited to the examples disclosed below.

Preparation of Li-B-Si-M-O Oxide and Solid Electrolyte

Example 1: Li-B-Si-Fe-O Oxide and Solid Electrolyte

An oxide-forming composition was prepared by mixing the following components: 2 M tetraethyl orthosilicate (TEOS) solution in ethanol; 1 M boric acid solution in ethanol; 3 M LiNOs solution in deionized water; 4 M citric acid solution in deionized water; and $Fe_2O_3$. The respective amounts of TEOS, boric acid, LiNOs, and $Fe_2O_3$ in the composition were stoichiometrically adjusted so as to provide a metal oxide having the composition shown in Table 1. Here. the amount of 4 M citric acid solution was 1 ml based on 100 ml of TEOS solution.

The oxide-forming composition was dried in air at 70 °C for 12 hours, heated to 350 °C at a heating rate of 2 degrees Celsius per minute (°C/min), and then subjected to a first heat-treatment (first heat-treating) at 350 °C for 3 hours. The brown powder thus produced was pulverized and pelletized to prepare pellets, and the pellets were placed in a platinum (Pt) cup, which was made with a 0.1 millimeter (mm) thick Pt foil (8 mm $\times$ 8 mm squares) with a depth of 0.4 mm and a diameter of 6 mm. The Pt cup containing the pellets was placed on a single alumina plate, heated to 900 °C at a heating rate of 5 °C/min, and then subjected to a second heat-treatment (second heat-treating) at 900 °C for 30 minutes.

Subsequently, the Pt cup containing the pellets disposed on the alumina plate was transferred onto a stainless-steel plate to quench the sample to room temperature (25 °C) within 5 seconds and thereby prepare a solid electrolyte containing a Li-B-Si-Fe-O oxide. The oxide had a thickness of about 0.3 mm and a weight of about 25 milligrams (mg).

Example 2: Li-B-Si-Cr-O Oxide and Solid Electrolyte

A Li-B-Si-Cr-O oxide and a solid electrolyte were prepared following the same process as in Example 1, except that $Cr_2O_3$ was used in place of $Fe_2O_3$ when forming the oxide composition.

Example 3: Li-B-Si-La-O Oxide and Solid Electrolyte

A Li-B-Si-La-O oxide and a solid electrolyte were prepared following the same process as in Example 1, except that $La_2O_3$ was used in place of $Fe_2O_3$ when forming the oxide composition.

Example 4: Li-B-Si-Tl-O Oxide and Solid Electrolyte

A Li-B-Si-Tl-O oxide and a solid electrolyte were prepared following the same process as in Example 1, except that $Tl_2O_3$ was used in place of $Fe_2O_3$ when forming the oxide composition.

Example 5: Li-B-Si-Cr-O Oxide and Solid Electrolyte

A Li-B-Si-Cr-O oxide and a solid electrolyte were prepared following the same process as Example 1, except that when preparing the oxide, $Cr_2O_3$ was used in place of $Fe_2O_3$, and the amount of each precursor was controlled so as to provide a metal oxide having the composition as shown in Table 1.

Examples 6 to 7: Li-B-Si-Fe-O Oxide and Solid Electrolyte

A Li-B-Si-Fe-O oxide and a solid electrolyte were prepared following the same process as Example 1, except that the respective amounts of TEOS, boric acid, $LiNO_s$, and $Fe_2O_3$ in the composition were stoichiometrically adjusted so as to provide a metal oxide having the composition shown in Table 2.

Comparative Example 1: Li-B-Si-O Oxide and Solid Electrolyte

A Li-B-Si-O oxide and a solid electrolyte were prepared following the same process as Example 1, except that when preparing the oxide-forming composition, $Fe_2O_3$ was omitted, the amount of each precursor was controlled so as to provide a metal oxide having the composition as shown in Table 1.

Comparative Example 2: Li-B-Si-O Oxide and Solid Electrolyte

A Li-B-Si-O oxide and a solid Electrolyte were prepared following the same process as Example 1, except that when preparing the oxide-forming composition, $Fe_2O_3$ was omitted, the amount of each precursor was controlled so as to provide a metal oxide having the oxide-forming composition as shown in Table 1.

Comparative Example 3: Li-B-Si-La-O Oxide and Solid Electrolyte

A Li-B-Si-La-O oxide and a solid electrolyte were prepared following the same process as Example 1, except that when preparing the oxide-forming composition, $La_2O_3$ was used in place of $Fe_2O_3$, and the amount of each precursor was controlled so as to provide a metal oxide having the composition as shown in Table 1.

Table 1

| Item | Li-B-Si-M-O composition | Phase |
|---|---|---|
| Example 1 | $Li_{0.625}B_{0.321}Si_{0.044}Fe_{0.010}O_{0.897}$ | Glass |
| Example 2 | $Li_{0.625}B_{0.321}Si_{0.044}Cr_{0.010}O_{0.897}$ | Glass |
| Example 3 | $Li_{0.625}B_{0.321}Si_{0.044}La_{0.010}O_{0.897}$ | Glass |
| Example 4 | $Li_{0.625}B_{0.321}Si_{0.044}Tl_{0.010}O_{0.897}$ | Glass |

(continued)

| Item | Li-B-Si-M-O composition | Phase |
|---|---|---|
| Example 5 | $Li_{0.675}B_{0.277}Si_{0.038}Cr_{0.010}O_{0.844}$ | Glass |
| Comparative Example 1 | $Li_{0.533}B_{0.395}Si_{0.072}O_{1.003}$ | Glass |
| Comparative Example 2 | $Li_{0.632}B_{0.324}Si_{0.044}O_{0.890}$ | Glass-Ceramic |
| Comparative Example 3 | $Li_{0.575}B_{0.365}Si_{0.050}La_{0.010}O_{0.950}$ | Glass |

Table 2

| Item | Li-B-Si-M-O composition | Phase |
|---|---|---|
| Example 6 | $Li_{0.625}B_{0.301}Si_{0.044}Fe_{0.030}O_{0.897}$ | Glass |
| Example 7 | $Li_{0.625}B_{0.311}Si_{0.044}Fe_{0.020}O_{0.897}$ | Glass |

Preparation of All-Solid Secondary Battery

Example 8

A 500 $\mu$m-thick LLZO ($Li_7La_3Zr_2O_{12}$) pellet was prepared as a solid electrolyte layer.

Separately, a first anode active material layer slurry was bar-coated on top of a stainless steel (SUS) foil and dried at room temperature (25 °C) for 1 hour to thereby form a second anode active material layer (AgC layer) (thickness: about 7 $\mu$m).

The first anode active material layer slurry was prepared following the process below.

As an anode active material, carbon black (CB) having a primary particle diameter of about 38 nm and silver (Ag) particles having an average particle diameter of about 100 nm were prepared.

Carbon black ("CB", 3 grams) and silver particles (1 gram) were introduced into a container, and a PVA-PAA binder solution (2.692 grams, SUMITOMO SEIKA CHEMICALS CO., LTD, AG binder) mixed with distilled water (7 grams) was introduced into the container. The resulting mixture was subjected to stirring at 1,000 revolutions per minute (rpm) for 30 minutes to thereby form a first slurry. Zirconia balls (4 grams) and distilled water (20 grams) were introduced into the first slurry, followed by a second stirring at 1,000 rpm for 30 minutes, to thereby prepare a second slurry. Distilled water (20 grams) was introduced into the second slurry, followed by a third stirring at 1,000 rpm for 30 minutes, to thereby prepare a third slurry.

Meanwhile, an acid treatment was performed on the LLZO film to produce a LLZO film with pores. For the acid treatment, 1 M hydrochloric acid aqueous solution was used as an acid solution, and the LLZO film was dipped for 1 second and then washed with ethanol.

While the first anode active material layer (AgC layer) is placed on top of the LLZO film, the SUS foil was removed. Then, a lithium metal foil (thickness: 20 $\mu$m) and a copper foil as anode current collector were laminated on top of the first anode active material layer. Cold isostatic pressing (CIP, 250 megapascals at 25 °C) was applied to the resultant structure, to thereby manufacture a solid electrolyte layer/first anode active material layer/lithium metal/copper thin film stack.

$LiNi_{1/3}Co_{1/3}Mn_{1/3}O_2$ ("NCM") was prepared as a cathode active material, and the solid electrolyte $Li_{0.625}B_{0.321}Si_{0.044}Fe_{0.010}O_{0.897}$ of Example 1 was prepared as a solid electrolyte. Also, polytetrafluoroethylene (manufactured by Du Pont, TEFLON® binder) was prepared as a binder. In addition, carbon nanofibers ("CNF") were prepared as a conductive aid. Next, these cathode materials were mixed in a weight ratio of cathode active material:solid electrolyte:conductive aid:binder of 80:20:2:1. The mixture was stretched into a sheet form to prepare a cathode active material sheet having a thickness of 30 $\mu$m. Then, this cathode active material sheet was compressed on a cathode current collector made of a 18 $\mu$m-thick aluminum foil to thereby prepare a cathode layer.

The cathode active material layer of the cathode layer thus prepared was impregnated in an electrolyte containing 2.0 M LiFSI dissolved in ionic fluid PYR13FSI (N-propyl-N-methyl-pyrrolidinium bis(fluorosulfonyl)imide).

The cathode layer was placed in a SUS cap such that the cathode active material layer impregnated in the electrolyte is facing upward. A solid electrolyte layer/anode layer laminate was positioned such that the solid electrolyte layer is placed on the cathode active material layer, and the laminate was then sealed to produce an all-solid secondary battery. The cathode layer and the anode layer were insulated by an insulating material. A part of each of the cathode current collector and the anode current collector protruded out of the sealed battery and were used as a cathode layer terminal and an anode layer terminal, respectively.

Comparative Example 4

An all-solid secondary battery was prepared following the same process as Example 8, except that the solid electrolyte of Comparative Example 1 was used instead of the solid electrolyte of Example 1 when preparing the cathode layer.

Evaluation Example 1: X-Ray Diffraction Analysis

XRD spectra of the solid electrolytes prepared in Examples 1 to 4 and Comparative Examples 1 to 3 were acquired, and representative results thereof are shown in FIG. 1.

The XRD spectra were obtained using X'pert pro (PANalytical) using Cu K$\alpha$ radiation (1.54056 angstroms, Å).

As shown in FIG. 1, the solid electrolyte of Comparative Example 2 had a peak observed in the region of $2\theta$=12° to 14°, indicating that it had a glass-ceramic crystal structure.

Meanwhile, on the XRD spectra of the solid electrolytes of Examples 1 to 4, the peak intensity ratio ($I_b/I_a$) of peak B intensity ($I_b$) at a diffraction angle of 13°$2\theta \pm 1.0°2\Theta$ to peak A intensity ($I_a$) at a diffraction angle of 5.0°$2\theta$ to 9.0°$2\theta$ was found to be 3.0 or less. That is, the solid electrolytes of Examples 1 to 4, unlike Comparative Example 2, showed no diffraction angle patterns characteristic of crystals and thus were identified as a glass phase. In the present disclosure, the intensity ($I_a$) of peak A exhibits a maximum intensity in a region of a diffraction angle of $2\theta$=5° to 9°, and the intensity ($I_b$) of peak B exhibits a maximum intensity in a region of a diffraction angle of $2\theta$=12° to 14°.

In addition, the XRD analysis of the solid electrolytes of Examples 5 to 7 provided similar diffraction angle patterns as the solid electrolyte of Example 1.

Evaluation Example 2: Measurement of Ionic Conductivity

Each of the solid electrolyte pellets prepared in Examples 1 to 5 and Comparative Examples 1 to 3 had a gold (Au) electrode sputtered on both sides thereof, thereby depositing a shield electrode. The sample with shield electrodes formed on both sides thereof was measured for impedance by the 2-probe method using an impedance analyzer (Solartron 1400A/1455A impedance analyzer). The frequency range was 1 hertz (Hz) to 1 megahertz (MHz), and the amplitude voltage was 10 millivolts (mV). The measurement was made at 25 °C under a dry air atmosphere. Resistance values were obtained from the arc of the Nyquist plot for the impedance measurements, and after correcting electrode area and pellet thickness therefrom, ionic conductivities were calculated and shown in Table 3 below.

As shown in Table 3 below, the solid electrolytes of Examples 1 to 3 and 5 were found to have improved ionic conductivity at 60 °C, as compared with the oxides of Comparative Examples 1 to 3.

As shown in Table 3 below, the glass oxide of Example 1 was found to have an ionic conductivity greater than two times that of the undoped glass oxide of Comparative Example 1.

In the oxide $Li_{0.625}B_{0.321}Si_{0.044}Cr_{0.010}O_{0.897}$ of Example 2, the oxidation state of chromium could be identified by XPS spectra, and the oxidation states of chromium were +3 and +6. The peak corresponding to $Cr^{6+}$ appeared at a binding energy of 580.60 electronvolts (eV), and the peaks corresponding to $Cr^{3+}$ appeared at a binding energy of 575.20 eV, 576.99 eV, and 578.40 eV.

In addition, the crystallization temperature of the oxide of Example 2 was found to be 446 °C, and the crystallization temperature of the oxide of Example 5 was found to be 371 °C, both of which were greater than that of Comparative Example 2.

Evaluation Example 3: Softness Measurement

The solid electrolytes prepared in Examples 1 to 5 and Comparative Examples 1 to 3 were evaluated for softness by the following method.

Softness may be evaluated by the Brinell hardness test method, and this test can measure the Brinell hardness number (BHN) and softness is defined as 1/BHN. Testing may be performed in accordance with ISO 6506.

BHN may be expressed as Equation 1 below.

Equation 1

$$BHN = \frac{2P}{\pi D \left( D - \sqrt{(D^2 - d^2)} \right)}$$

In Equation 1, P represents applied load (kilograms force, kgf), D represents diameter of an indenter ball (mm), and d represents diameter of indentation (mm).

To evaluate the softness (deformability) of a sample, gold contacts (Au contacts) (EIS measurement) were first removed by polishing, and the sample was placed on an alumina plate. On the sample, a stainless-steel block having 64 holes was placed with spacers to keep the block from contacting the sample, and a zirconia ball was placed on each sample, and various weights were applied by placing a screw rod with a varying number of nuts on the zirconia ball. During this softness test, the total weight used was 40 grams, which provided sufficient sensitivity. Further, the test temperature (350 °C in this case) was reached at a rate of 5 °C/min and maintained for 3 hours. Then, the diameter of dimples formed at room temperature (25 °C) was measured using a microscope.

Table 3

| Item | Li-B-Si-M-O composition | Phase | Li ions Conductivity (S/cm) @60 °C | Softness (1/BHN) (350 °C) |
|---|---|---|---|---|
| Example 1 | $Li_{0.625}B_{0.321}Si_{0.044}Fe_{0.010}O_{0.897}$ | Glass | $4.20 \times 10^{-6}$ | 233 |
| Example 2 | $Li_{0.625}B_{0.321}Si_{0.044}Cr_{0.010}O_{0.897}$ | Glass | $3.74 \times 10^{-6}$ | 231 |
| Example 3 | $Li_{0.625}B_{0.321}Si_{0.044}La_{0.010}O_{0.897}$ | Glass | $3.70 \times 10^{-6}$ | 251 |
| Example 4 | $Li_{0.625}B_{0.321}Si_{0.044}Tl_{0.010}O_{0.897}$ | Glass | $1.87 \times 10^{-6}$ | 187 |
| Example 5 | $Li_{0.675}B_{0.277}Si_{0.038}Cr_{0.010}O_{0.844}$ | Glass | $3.74 \times 10^{-6}$ | 231 |
| Comparative Example 1 | $Li_{0.533}B_{0.395}Si_{0.072}O_{1.003}$ | Glass | $2.00 \times 10^{-6}$ | 0 |
| Comparative Example 2 | $Li_{0.632}B_{0.324}Si_{0.044}O_{0.890}$ | Glass-Ceramic | $2.00 \times 10^{-6}$ | 151 |
| Comparative Example 3 | $Li_{0.575}B_{0.365}Si_{0.050}La_{0.010}O_{0.950}$ | Glass | $1.98 \times 10^{-6}$ | 0 |

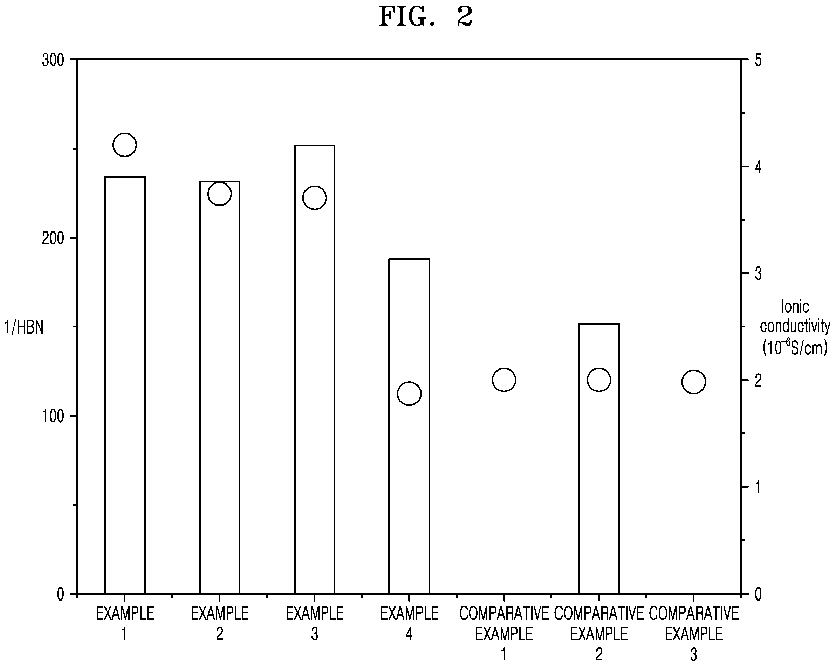

As shown in Table 3 and FIG. 2, the solid electrolytes of Examples 1 to 5 were found to have improved softness over Comparative Examples 1 to 3, which indicates sufficient interconnections formed based on their soft physical characteristic. This result shows that the solid electrolytes of Examples 1 to 5 have improved deformability over Comparative Examples 1 to 3. In addition, the results of the softness test on the solid electrolytes of Examples 6 to 7 show a softness of 231 1/BHN or greater, similar to the solid electrolyte of Example 1.

As shown in FIG. 2, the solid electrolyte of Comparative Example 2 provided superior softness versus the solid electrolytes of Comparative Examples 1 and 3, but provided less softness than Examples 1 to 4, and less ionic conductivity compared to Examples 1 to 4.

Evaluation Example 4: Room-Temperature Charge-Discharge Test

The all-solid secondary batteries prepared in Example 8 and Comparative Example 4 were evaluated for charge-discharge characteristics by the following charge-discharge test conditions. The charge-discharge test was performed while the all-solid secondary battery was held in a constant-temperature bath at 25 °C.

In the 1st cycle, the battery was charged at a constant current of 0.6 milliamperes per square centimeter ($mA/cm^2$) until the battery voltage reached 4.3 volts (V). Subsequently, the battery was discharged at a constant current of 0.6 $mA/cm^2$ until the battery voltage reached 2.8 V.

From the 2nd cycle to the 13th cycle, the battery was charged at a constant current of 1.5 $mA/cm^2$ until the battery voltage reached 4.3 V. Subsequently, the battery was discharged at a constant current of 1.5 $mA/cm^2$ until the battery voltage reached 2.8 V.

From the 14th cycle to the 150th cycle, the battery was charged at a constant current of 2.55 $mA/cm^2$ until the battery voltage reached 4.3 V. Subsequently, the battery was discharged at a constant current of 2.55 $mA/cm^2$ until the battery voltage reached 2.8 V.

The charge-discharge test demonstrated that the all-solid secondary battery of Example 8 performed up to 150 cycles without short-circuit, provided stable charging and discharging even at a current density of 2.55 $mA/cm^2$, and had high charge-discharge efficiency. The all-solid secondary battery of Example 8 also had improved capacity retention rate compared to that of the all-solid secondary battery of Comparative Example 4.

According to one aspect of the present disclosure, a solid electrolyte having improved low-temperature formability while having excellent lithium-ion conductivity may be provided. This solid electrolyte may be used to produce a secondary battery having improved cycling performance.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A solid electrolyte, comprising

    a metal oxide comprising lithium, silicon, and boron and a metal comprising at least one of iron, chromium, lanthanum, or thallium, and,
    wherein the solid electrolyte has a glass structure including 60 mole percent or
    greater of lithium based on 100 mole percent of the total amount of the metal and lithium, silicon, and boron, and
    wherein the solid electrolyte has a softness of 152 1/BHN or greater, wherein 1/BHN is an inverse of a Brinell hardness number as measured in accordance with ISO 6506.

2. The solid electrolyte of claim 1, wherein in an X-ray diffraction spectrum of the solid electrolyte, a peak intensity ratio of peak intensity at a diffraction angle of 13°2θ ±1.0°2θ to peak intensity at a diffraction angle 5.0°2θ to 9.0°2θ is 3.0 or less; and/or

    wherein an amount of the metal in the oxide is 4 mole percent or less based on 100 mole percent of the total amount of the metal, lithium, silicon, and boron; and/or
    wherein an amount of boron in the oxide is 20 mole percent to 60 mole percent based on 100 mole percent of the total amount of the metal, lithium, silicon, and boron.

3. The solid electrolyte of claims 1 or 2,

    wherein an amount of silicon in the metal oxide is 0.1 mole percent to 40 mole percent based on 100 mole percent of the total amount of the metal, lithium, silicon, and boron; and/or
    wherein the solid electrolyte has an ionic conductivity at 60 °C of 1 x 10$^{-7}$ siemens per centimeter or greater; and/or
    wherein an amount of lithium in the oxide is 60 mole percent to 80 mole percent based on 100 mole percent of the total amount of the metal, lithium, silicon, and boron.

4. The solid electrolyte of any of claims 1-3,

    wherein the metal oxide is an oxide represented by Formula 1

    Formula 1          $Li_aB_bSi_cM_dO_e$

    wherein in Formula 1, M is at least one metal and is at least one of iron, chromium, lanthanum, or thallium, 0.6≤a≤0.8, 0.2≤b≤0.38, 0.01≤c≤0.19, 0.01≤d≤0.04, and 0<e≤1,
    wherein the total sum of a, b, c, and d is 1.

5. The solid electrolyte of any of claims 1-4,

    wherein the oxide is at least one of Formulas 2 to 5

    Formula 2          $Li_aB_bSi_cFe_dO_e$

    wherein in Formula 2, 0.6≤a≤0.73, 0.2≤b≤0.38, 0.01≤c≤0.1, 0.01≤d≤0.03, and 0<e≤1, wherein the total sum of a, b, c, and d is 1,

    Formula 3          $Li_aB_bSi_cCr_dO_e$

    wherein in Formula 3, 0.6≤a≤0.73, 0.2≤b≤0.38, 0.01≤c≤0.1, 0.01≤d≤0.03, and 0<e≤1, wherein the total sum of a, b, c, and d is 1,

Formula 4 $\quad$ $Li_aB_bSi_cLa_dO_e$

wherein in Formula 4, $0.6 \leq a \leq 0.73$, $0.2 \leq b \leq 0.38$, $0.01 \leq c \leq 0.1$, $0.01 \leq d \leq 0.03$, and $0 < e \leq 1$, wherein the total sum of a, b, c, and d is 1, or

Formula 5 $\quad$ $Li_aB_bSi_cTl_dO_e$

wherein in Formula 5, $0.6 \leq a \leq 0.73$, $0.2 \leq b \leq 0.38$, $0.01 \leq c \leq 0.1$, $0.01 \leq d \leq 0.03$, and $0 < e \leq 1$, wherein the total sum of a, b, c, and d is 1.

6. The solid electrolyte of any of claims 1-5,
wherein the solid electrolyte has a softness of 152 1/BHN to 260 1/BHN, wherein 1/BHN is an inverse of a Brinell hardness number as measured in accordance with ISO 6506.

7. A secondary battery comprising:

a cathode;
an anode current collector; and
an electrolyte disposed between the cathode and the anode current collector,
wherein at least one of the cathode or the electrolyte comprises the solid electrolyte of any of claims 1-6;
preferably wherein the secondary battery includes a lithium battery, an all-solid battery, or a multilayer ceramic battery.

8. The secondary battery of claim 7,

wherein the cathode includes a metal oxide having a glass structure and the metal oxide comprises lithium, silicon, and boron, and at a metal comprising least one of iron, chromium, lanthanum, or thallium, and the amount of lithium of the oxide is 60 mole percent or greater based on 100 mole percent of the total amount of the metal, lithium, silicon, and boron,
wherein the solid electrolyte has a softness of 152 1/BHN or greater, wherein 1/BHN is an inverse of a Brinell hardness number as measured in accordance with ISO 6506.

9. The secondary battery of claims 7 or 8,
wherein a first anode active material layer is disposed between the anode current collector and the electrolyte.

10. The secondary battery of any of claims 7-9,

wherein the cathode comprises a cathode current collector,
wherein at least one of the cathode current collector or the anode current collector comprises a base film and a metal layer disposed on one side or both sides of the base film,
wherein the base film comprises a polymer, the polymer comprising at least one of polyethylene terephthalate, polyethylene, polypropylene, polybutylene terephthalate, or polyimide, and
wherein the metal layer comprises at least one of indium, copper, magnesium, stainless steel, titanium, iron, cobalt, nickel, zinc, aluminum, germanium, lithium, or an alloy thereof.

11. The secondary battery of any of claims 7-10,

wherein the electrolyte includes a solid electrolyte,
wherein the solid electrolyte comprises at least one of a sulfide solid electrolyte, an oxide solid electrolyte, a polymer solid electrolyte, or a gel electrolyte,
wherein the gel electrolyte comprises a polymer gel electrolyte.

12. A method of preparing a solid electrolyte, the method comprising:

mixing
a metal precursor containing at least one of iron, chromium, lanthanum, or thallium,
a lithium precursor, a silicon precursor, a boron precursor, and a solvent to obtain a mixture;

first heat-treating the mixture to provide a first heat-treated mixture;
second heat-treating the first heat-treated mixture to provide a product; and
quenching the product to provide the solid electrolyte of any of claims 1-6.

13. The method of claim 12,

wherein the second heat-treating comprises heat-treating at a temperature greater than a temperature of the first heat-treating, wherein the first heat-treating comprises heat-treating at a temperature of 200 °C to 400 °C, and the second heat-treating comprises heat-treating at a temperature of 700 °C to 1,000 °C.

14. The method of claims 12 or 13,

wherein the metal precursor comprises at least one of $Fe_2O_3$, $Cr_2O_3$, $La_2O_2$, or $Tl_2O3$,
wherein the lithium precursor comprises at least one of $Li_2O$, $Li_2CO_3$, LiCl, LiNOs, or Li(OH),
wherein the silicon precursor comprises at least one of tetraethyl orthosilicate, or $SiO_2$, and
wherein the boron precursor comprises at least one of $H_3BO_3$, or $B_2O_3$.

15. The method of any of claims 12-14,

wherein prior to the first heat-treating, further comprising
drying the mixture to provide a dried mixture, wherein the drying comprises drying at a temperature of 50 °C to 90 °C.

# FIG. 1

# FIG. 2

# FIG. 3

# FIG. 4

# FIG. 5

100

50

72

40

71

10

30

20

# FIG. 6

# FIG. 7

# FIG. 8

# FIG. 9

# FIG. 10

# FIG. 11

710

| 71 | UNIT CELL2 |
| 73 | |
| 72 | |
| 74 | |
| 72 | UNIT CELL1 |
| 73 | |
| 71 | |

# FIG. 12

810

| 82 | UNIT CELL3 |
| 83 | |
| 81 | |
| 84 | |
| 81 | UNIT CELL2 |
| 83 | |
| 82 | |
| 84 | |
| 82 | UNIT CELL1 |
| 83 | |
| 81 | |

Europäisches
Patentamt

European
Patent Office

Office européen
des brevets

# EUROPEAN SEARCH REPORT

**Application Number**

EP 24 20 5461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 220 393 A1 (SONY CORP [JP]) 20 September 2017 (2017-09-20) * examples 1-1,1-2,4-1 to 4-3,8-1, 9-1 * * paragraph [0033] - paragraph [0034]; table 5 * * table 2 * * table 1 * * paragraph [0018] * * paragraph [0045] * * paragraph [0174] * * paragraph [0127] - paragraph [0129] * * paragraph [0173] - paragraph [0174] * ----- | 1-15 | INV. H01M4/13 H01M4/62 H01M10/0562 H01M4/04 H01M4/02 |
| A | US 2015/162614 A1 (KOSHIKA HIROMICHI [JP] ET AL) 11 June 2015 (2015-06-11) * paragraph [0134] - paragraph [0139] * * paragraph [0153] - paragraph [0158] * ----- | 1-15 | |
| A | US 2019/341652 A1 (LAUGHMAN DAVID MICHAEL [GB] ET AL) 7 November 2019 (2019-11-07) * the whole document * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 27 February 2025 | Tylus, Urszula |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................
& : member of the same patent family, corresponding
   document

EPO FORM 1503 03.82 (P04C01)

EP 4 539 137 A1

## ANNEX TO THE EUROPEAN SEARCH REPORT
## ON EUROPEAN PATENT APPLICATION NO.

EP 24 20 5461

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2025

| Patent document cited in search report | | Publication date | Patent family member(s) | | Publication date |
|---|---|---|---|---|---|
| EP 3220393 | A1 | 20-09-2017 | CN | 106716549 A | 24-05-2017 |
| | | | CN | 109065837 A | 21-12-2018 |
| | | | EP | 3220393 A1 | 20-09-2017 |
| | | | JP | 6773170 B2 | 21-10-2020 |
| | | | JP | 2019153592 A | 12-09-2019 |
| | | | JP | WO2016075921 A1 | 17-08-2017 |
| | | | KR | 20170083020 A | 17-07-2017 |
| | | | US | 2017229734 A1 | 10-08-2017 |
| | | | WO | 2016075921 A1 | 19-05-2016 |
| US 2015162614 | A1 | 11-06-2015 | CN | 104380508 A | 25-02-2015 |
| | | | EP | 2869371 A1 | 06-05-2015 |
| | | | JP | 6243103 B2 | 06-12-2017 |
| | | | JP | 2014011033 A | 20-01-2014 |
| | | | KR | 20150035574 A | 06-04-2015 |
| | | | TW | 201415698 A | 16-04-2014 |
| | | | US | 2015162614 A1 | 11-06-2015 |
| | | | WO | 2014002483 A1 | 03-01-2014 |
| US 2019341652 | A1 | 07-11-2019 | CN | 109643784 A | 16-04-2019 |
| | | | CN | 115312846 A | 08-11-2022 |
| | | | EP | 3472881 A1 | 24-04-2019 |
| | | | JP | 7071934 B2 | 19-05-2022 |
| | | | JP | 2019518311 A | 27-06-2019 |
| | | | KR | 20190018653 A | 25-02-2019 |
| | | | US | 2019341652 A1 | 07-11-2019 |
| | | | WO | 2017216532 A1 | 21-12-2017 |

EPO FORM P0459

For more details about this annex : see Official Journal of the European Patent Office, No. 12/82